# EUROPÄISCHE PATENTSCHRIFT

(11) **EP 1 595 909 B1**
(45) Veröffentlichungstag und Bekanntmachung des Hinweises auf die Patenterteilung: **02.01.2008**
(21) Anmeldenummer: 05009548.8
(22) Anmeldetag: 30.04.2005
(51) Int. Cl.: C08G 77/38

(54) **Verwendung von neuen Polysiloxanen mit über SiOC-Gruppen gebundenen (Meth)acrylsäureestergruppen als Additive für strahlenhärtende Beschichtungen**
Use of novel polysiloxanes, containing over SiOC-group bonded (meth)acrylic ester groups, as additives for radiation-curable coatings
Utilisation de nouveaux polysiloxanes présentant des groupments (meth)acrylates, reliés par des groupments SiOC, comme additifs pour des rêvetments durcisables par rayonnement

(30) Priorität: 14.05.2004 DE 102004024009
(43) Veröffentlichungstag der Anmeldung: 16.11.2005
(73) Patentinhaber: Evonik Goldschmidt GmbH, 45127 Essen (DE)
(72) Erfinder: Herrwerth, Sascha, Dr., 45128 Essen (DE); Cavaleiro, Pedro, Dr., 41747 Viersen (DE); Esselborn, Jutta, 45147 Essen (DE); Oestreich, Sascha Dr., 45279 Essen (DE)

(56) Entgegenhaltungen:
- EP-A- 1 544 232
- US-A- 4 306 050
- BLACKWELL JAMES M: "B(C6F5)3-catalyzed silylation of alcohols: a mild , general method for synthesis of silyl ethers" CAPLUS, 1999, XP002163708

## Beschreibung

Gegenstand der Erfindung ist die Verwendung von neuartigen Polysiloxanen mit über SiOC-Gruppen gebundenen (Meth)acrylsäureestergruppen als Additive für strahlenhärtende (UV-Strahlen, Elektronenstrahlung) Beschichtungen.

Die (Meth)acrylatgruppen enthaltenden Organopolysiloxane weisen ausgezeichnete Eigenschaften als Additive in strahlenhärtenden Beschichtungen, insbesondere Druckfarben, auf. Diese Beschichtungen besitzen neben guten Release-Eigenschaften eine verbesserte Kratzfestigkeit und erhöhte Gleitfähigkeit.

Keine Emissionen, geringe Investitionen und niedrigerer Energiebedarf durch kurze Trockenanlagen, hohe Produktionszahlen dank schneller Härtung und in vielen Fällen eine bessere Qualität der Beschichtung, vor allem hinsichtlich Glanz und Abriebfestigkeit, sind die Gründe dafür, dass auf dem Gebiet der Industrielacke die Strahlenhärtung die expansivste Applikationsform darstellt.

Strahlenhärtende Beschichtungen sind bekannt und beispielsweise in "UV & EB curing formulation for printing inks, coatings & paints" (R. Holman, P. Oldring, London 1988) und "The Formulation of UV-Curable Powder Coatings" (J. Bender, K. Lehmann et all, RadTech Europe 1999, Conference Proceedings, Seite 615 ff.) beschrieben.

Ihre Eigenschaften sind ursächlich mit den zugrundeliegenden Oligomeren verknüpft. Dabei basieren die meisten der kommerziell erhältlichen Oligomere, die in strahlenhärtenden (UV/EB)-Systemen Anwendung finden, auf modifizierten Acrylaten (Mw = 300 bis 2.000 g/Mol).

Die vor allem für Papierbeschichtungen häufig verwendeten Epoxyacrylate werden aufgrund der raschen Härtung sowie der erzielbaren Härte und Chemikalienbeständigkeit geschätzt. Für hochwertige Beschichtungen werden auch Urethanacrylate eingesetzt, die neben einer verbesserten Flexibilität insbesondere ein ausgezeichnetes Benetzungsverhalten sowie Chemikalienresistenz und Härte bedingen.

Durch die Verwendung von Polyetheracrylaten kann hingegen leichter eine gewünschte niedrigere Verarbeitungsviskosität erreicht werden. Allerdings müssen hier Einbußen hinsichtlich der oben genannten Eigenschaften akzeptiert werden.

Weitere Rezepturbestandteile sind ein oder mehrere Photoinitiatoren, Pigment(e) sowie ein funktionelles, häufig auch multifunktionelles Monomer mit einem Molekulargewicht Mw bis zu 300 g/Mol als Reaktivverdünner, der die Viskosität des Systems an die Verarbeitungsbedingungen anpasst.

Ein wichtiges Einsatzgebiet neben der holzverarbeitenden Industrie sind Druckfarben für Papier, wie sie zum Beispiel für das Bedrucken von Schallplattenhüllen, Buchdeckeln, Ansichts- und Kunststoffpostkarten sowie hochwertigen Katalogen verwendet werden. Bei der industriellen Herstellung dieser Druckerzeugnisse bereitet die Handhabung dieser Gegenstände Schwierigkeiten. So ist es nicht immer zu vermeiden, dass die nach der durch Strahlung induzierten Aushärtung der Farbe gestapelten Elemente Schäden an der Oberfläche erleiden.

Bei der Herstellung bedruckter Verpackungsmaterialien ist darüber hinaus eine rasche Release-Wirkung der Druckfarbe wünschenswert, so dass kurz nach dem Druckvorgang aufgebrachte Etiketten oder Codierungen zu einem späteren Zeitpunkt ohne Beschädigung des Druckbildes wieder entfernt werden können.

Man hat bereits versucht, die Handhabbarkeit frisch gedruckter Gegenstände dadurch zu verbessern, dass man der Druckfarbe reibungsmindernde Zusätze, wie Öle oder Wachse (z. B. Polyethylen- oder Polytetrafluorethylenwachse), zugesetzt oder diese nachträglich auf die gedruckten Oberflächen aufgebracht hat. Häufig führt dies zu einem störenden Glanzverlust. Das nachträgliche Aufbringen von Wachs auf das Druckerzeugnis kann auch nicht immer befriedigen, zumal durch diesen zusätzlichen Verfahrensschritt die Fertigungskosten erhöht werden. Auch werden hohe Einsatzkonzentrationen benötigt, um eine Verbesserung der Kratzfestigkeit zu erzielen. Eine signifikante Release-Wirkung wird so nicht erzielt.

Ähnlich wie in lufttrocknenden oder forciert (Temperatur) trocknenden Systemen werden heute auch Siliconöle oder auch organisch modifizierte Siloxane, wie z. B. Polyethersiloxane, zu diesen Zwecken eingesetzt. Diese werden jedoch bei der strahlungsinduzierten Vernetzungsreaktion nicht chemisch in den Film eingebaut, so dass diese Zusätze aufgrund ihrer Inkompatibilität mit der Zeit an der Oberfläche ausschwimmen und das Silicon zum einen zum Beispiel bei erneuten Druckprozessen an Stellen gelangen kann, an denen es störend wirkt und zum anderen der Effekt der verbesserten Kraftzfestigkeit bestenfalls temporärer Natur ist. Insbesondere ist nicht gänzlich zu vermeiden, dass bei Stapelvorgängen das Siliconadditiv an die Rückseite des darüberliegenden Druckerzeugnisses gelangt.

In der Verpackungsindustrie ist darüber hinaus darauf zu achten, dass durch den Additivzusatz dem Druckerzeugnis in möglichst kurzer Zeit ein Release-Effekt verliehen wird, so dass aufgeklebte Etiketten oder Codierungen nachträglich ohne Beschädigung des Druckerzeugnisses entfernt werden können.

Es besteht daher in der Praxis ein Bedarf an vernetzbaren, modifizierten Siliconzusatzmitteln, welche in geringen Konzentrationen die Handhabbarkeit von insbesondere serienmäßig bedruckten Gegenständen verbessern, wobei diese Zusatzmittel insbesondere die Kratzfestigkeit der frischen Oberflächen verbessern, deren Gleitfähigkeit erhöhen, sehr rasch nach Vernetzung eine hohe Release-Wirkung aufweisen und aufgrund ihrer Vernetzung stationär im Film verbleiben. Dabei sollen derartige Zusatzmittel von der Art und Zusammensetzung der Druckfarbe, der sie zur Verbesserung der vorgenannten Eigenschaften zugesetzt werden, weitgehend unabhängig und universell anwendbar sein. Diese Additive sollen in möglichst geringen Mengen wirksam sein und die anwendungstechnischen Eigenschaften der Druckfarbe nicht verschlechtern. Sie sollen insbesondere nicht die Ausbildung des Oberflächenfilmes und die Aushärtung der Druckfarbe beeinträchtigen. Sie dürfen ferner keinen nachteiligen Effekt auf die Stabilität der Druckfarbe haben und dürfen die Verlaufeigenschaften nicht verschlechtern.

Polysiloxane, die Acrylsäureestergruppen (Acrylatgruppen) enthalten, haben sich als unter energiereicher Strahlung härtbare Additive, z. B. für Druckfarben und zur Herstellung von Lackbindemitteln oder für Beschichtungsmittel für Kunststoff-, Papier-, Holz- und Metalloberflächen, bewährt. Die Härtung erfolgt insbesondere durch UV-Strahlung (nach Zusatz bekannter Photoinitiatoren, wie z. B. Benzophenon und seine Derivate) oder durch Elektronenstrahlung.

Polysiloxane können auf vielfältige Art mit (Meth)acrylsäureestergruppen versehen werden. Um organische Gruppen an ein Siloxan zu binden, stehen grundsätzlich zwei verschiedene Bindungstypen zur Verfügung. Im ersten Fall ist ein Kohlenstoffatom direkt an ein Siliciumatom gebunden (SiC-Verknüpfung), im zweiten Fall ist ein Kohlenstoffatom über ein Sauerstoffatom an das Siliciumatom gebunden (SiOC-Verknüpfung).

Die SiC-Verknüpfung resultiert zumeist aus einer Hydrosilylierungsreaktion.

Organopolysiloxane, bei denen die acrylsäureesterhaltigen organischen Gruppen über Si-C-Bindungen mit dem Polysiloxangerüst verbunden sind, sind Stand der Technik. Diese können z.B. dadurch hergestellt werden, dass man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der US-4 978 726 beschrieben.

Eine weitere Möglichkeit der Herstellung (meth)acrylat-modifizierter Polysiloxane mit Si-C-Verknüpfung der modifizierenden Gruppe(n) besteht darin, dass man an ein Wasserstoffsiloxan einen Alkohol mit einer olefinischen Doppelbindung, z. B. Allylalkohol, in Gegenwart eines Platinkatalysators addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der US-4 963 438 beschrieben.

Ferner ist die Herstellung von (meth)acrylat-modifizierten Polysiloxanen mit Si-C-Verknüpfung der modifizierten Gruppe(n) möglich, durch die Anlagerung einer olefinischen Doppelbindung, z.B. Allylpolyether, in Gegenwart eines Hydrosilylierungskatalysators an ein Wasserstoffsiloxan und eine enzymatisch katalysierte Ver- oder Umesterung unter Verwendung von (Meth)acrylsäureestern. Diese Vorgehensweise ist z.B. in der US-B-6 288 129 beschrieben.

Des Weiteren ist es möglich, jeweils mehrere (Meth)acrylatgruppen pro Verbindungsglied an das Siloxangerüst zu binden. Um eine möglichst gute Vernetzung, das heißt, eine möglichst hohe Anzahl an reaktiven Gruppen, bei gleichzeitig so geringer Modifizierungsdichte am Siloxangerüst wie möglich zu erzielen, ist es wünschenswert, mehr als eine (Meth)acrylatgruppe je Verbrückungsglied anzubinden. Solche Verfahren sind z.B. in der US-B-6 211 322 beschrieben.

Alle diese via SiC-synthetisierten (meth)acrylat-modifizierten Organosiloxane, die zur Zeit den Stand der Technik darstellen, haben den Nachteil, dass sie in mehrstufigen Synthesen hergestellt werden müssen und die daraus resultierenden hohen Kosten sowie der hohe technische Aufwand für die Produktion.

Für die Bildung einer SiOC-Verknüpfung stehen mehrere Methoden zur Verfügung. Klassischerweise werden SiOC-Verknüpfungen durch die Reaktion eines Siloxans mit einer am Siliciumatom gebundenen Abgangsgruppe (z.B. Halogen) und einem Alkohol gebildet.

Organopolysiloxane, bei denen die (meth)acrylathaltigen organischen Gruppen über eine Si-O-C-Bindung mit dem Polysiloxangerüst über Halogen als Abgangsgruppe verbunden sind, sind in der US-4 301 268 und der US-4 306 050 beschrieben. Besonders Chlorsiloxane sind für diesen Reaktionstyp weit verbreitet.

Chlorsiloxane sind jedoch schwierig zu handhaben, da sie äußerst reaktionsfreudig sind. Der Einsatz von Chlorsiloxanen ist weiterhin mit dem Nachteil verbunden, dass der im Verlauf der Reaktion gebildete Chlorwasserstoff zu ökologischen Problemen führt und eine Handhabung auf korrosionsbeständige Anlagen beschränkt. Darüber hinaus können in Gegenwart von Chlorsiloxanen und Alkoholen organische Chlorverbindungen gebildet werden, die aus toxikologischen Gründen nicht wünschenswert sind.

Weiterhin ist es nicht einfach, bei der Reaktion eines Chlorsiloxans mit einem Alkohol einen quantitativen Umsatz zu erreichen. Häufig müssen Basen, die als HCI-Fänger dienen, eingesetzt werden, um gute Umsätze zu erzielen. Durch Einsatz dieser Basen kommt es zur Bildung großer Mengen an Salzfracht, die ihrerseits im industriellen Maßstab Probleme bei der Entfernung und Entsorgung bereiten.

Die Stabilität der Si-O-C-Bindung über lange Zeiträume ist entscheidend für die Verwendung als Additive für strahlenhärtende Beschichtungen. Es sollen daher keine Reaktions- oder Katalysatorrückstände in der Beschichtung verbleiben, die geeignet sind die Hydrolyse der SiOC-Bindung zu katalysieren. Die genannten Verfahren produzieren jedoch Säurerückstände oder eine Salzfracht, die nicht vollständig aus dem Reaktionsgemisch entfernbar ist. Es verbleiben katalytisch aktive Mengen in der strahlenhärtenden Beschichtung, die auch nach deren Vernetzung die SiOC-Bindung abbauen können. Zudem sind nach den genannten Verfahren nur endständig modifizierte Organopolysiloxane zugänglich und somit keine Möglichkeit zur Synthese von mittelständig via SiOC-(meth)acrylat-modifizierten Organosiloxanen gegeben.

Neben der weit verbreiteten Darstellung von endständigen (α,ω) Organopolysiloxanen mit Chlorsiloxanen und Alkoholen wird in US-5 310 842, US-B-6 239 303 die Synthese von mittelständig modifizierten Organopolysiloxanen via SiOC-Chemie die dehydrogenative Hydrosilylierung von lang- und kurzkettigen Alkoholen an SiH-Siloxane unter Verwendung von Ru- oder Pt-Verbindungen beschrieben.

Diese Methode ist lediglich geeignet, um verschiedene Alkohole end- und seitenständig dehydrogenativ an SiH-Siloxane zu koppeln.

Für den Fachmann ist jedoch leicht ersichtlich, dass diese zuvor beschriebenen Vorgehensweisen bei (meth)acrylgruppenhaltigen Alkoholen nicht praktikabel sind, da verschiedene Pt- oder Ru-katalysierte Nebenreaktionen, wie eine Anbindung der Doppelbindung oder Carbonylgruppe der (Meth)acrylatgruppen an die SiH-Einheiten auftreten (Journal of Polymer Science: Part A: Polymer Chemistry, Vol. 29, 1073-1076).

Des Weiteren sollten die erhaltenen Produkte im Gegensatz zum Verfahren nach dem Stand der Technik, wie z.B. ausgehend von Chlorsiloxanen, nicht mit aus der Substitutionsreaktion stammender Salzsäure, bzw. deren Neutralisationsprodukten entsprechenden Chloriden verunreinigt sein und somit die dargestellten (meth)acrylat-modifizierten Polysiloxane eine höhere Hydrolysestabilität der SiOC-Bindung aufweisen.

Folglich steht nach dem veröffentlichten Stand der Technik keine Möglichkeit zur Synthese von mittelständig (meth)acrylat-modifizierten Organosiloxanen via SiOC-Chemie mit definierten Strukturen zur Verfügung. Die bekannten Verfahren, die zu endständig (via SiOC-(meth)acrylat-modifizierten) Organosiloxanen führen, hinterlassen katalytische Mengen an SiOC-Bindungen abbauenden Substanzen.

In der nicht vorveröffentlichten DE-A-103 59 764 wird ein technisch einfaches Verfahren offenbart, das es erlaubt, neue via SiOC-Chemie end- und/oder seitenständige, (meth)acrylat-modifizierte, strahlenhärtbare Polysiloxane ohne Abbau des Siloxangrundgerüsts herzustellen.

Unter Verwendung eines lewissauren Katalysators oder einer Mischung aus einer Carbonsäure und dem Salz einer Carbonsäure können (meth)acrylathaltige Alkohole selektiv an end- und/oder seitenständige SiH-Siloxane gekoppelt werden, ohne dass ein Abbau des Siloxangerüstes beobachtet wird. Ferner treten keine Hydrosilylierungsreaktionen der (Meth)acrylatgruppen an SiH-Gruppen unter SiC-Verknüpfung auf, wie dies in der WO-A-02/12386 für olefinische Verbindungen und SiH-Siloxane unter Verwendung von Bor-haltigen Katalysatoren beschrieben wird.

Ein Gegenstand der DE-A-103 59 764 ist ein Verfahren zur Herstellung von Organopolysiloxanyl(meth)acrylaten, durch Umsetzung von SiH-Gruppen enthaltenden Polysiloxanen der allgemeinen durchschnittlichen Formel (II) 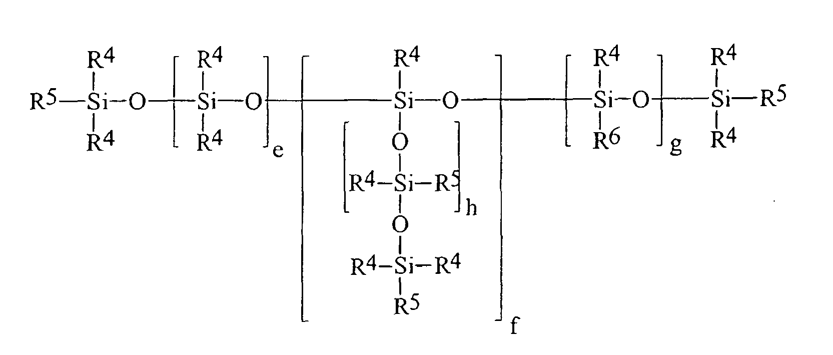 in denen
- R⁴: gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
- R⁵: H oder R⁴ ,
- R⁶: H,
- e: 0 bis 1.000,
- f: 0 bis 5,
- g: 0 bis 200,
- h: 0 bis 1.000
sind, wobei mindestens ein Rest R⁵ oder R⁶ = H sein muss,
mit einem Alkohol, der ausgewählt ist aus der Gruppe der einfach oder mehrfach (meth)acrylierten Monoalkohole oder Polyalkohole, oder aus einer Mischung derselbigen, oder aus Mischungen der einfach oder mehrfach (meth)acrylierten Monoalkohole oder Polyalkohole mit beliebigen anderen Alkoholen, die ausgewählt sind aus der Gruppe der linearen oder verzweigten, gesättigten, ein- oder mehrfach ungesättigten, aromatischen, aliphatisch-aromatischen Mono- oder Polyalkohole, Polyethermonoalkohole, Polyetherpolyalkohole, Polyestermonoalkohole, Polyesterpolyalkohole, Aminoalkohole, insbesondere N-Alkyl-, Arylamino-EO-, -PO-Alkoholen, N-Alkyl- oder Arylaminoalkohole sowie deren Gemischen, welches dadurch gekennzeichnet ist, dass man in einem oder mehreren Verfahrensschritten unter Einsatz eines lewissauren Katalysators oder eines Katalysators bestehend aus einer Carbonsäure und Salzen von Carbonsäuren die vorhandenen SiH-Gruppen des Polysiloxans teilweise oder vollständig durch Alkoholatreste der eingesetzten Alkohole ersetzt.

Ein weiterer Gegenstand der DE-A-103 59 764 sind neuartige Organopolysiloxane mit über SiOC-Gruppen mittel- und endständig oder nur mittelständig gebundene (Meth)acrylsäureester tragende Gruppen der allgemeinen durchschnittlichen Formel (I) 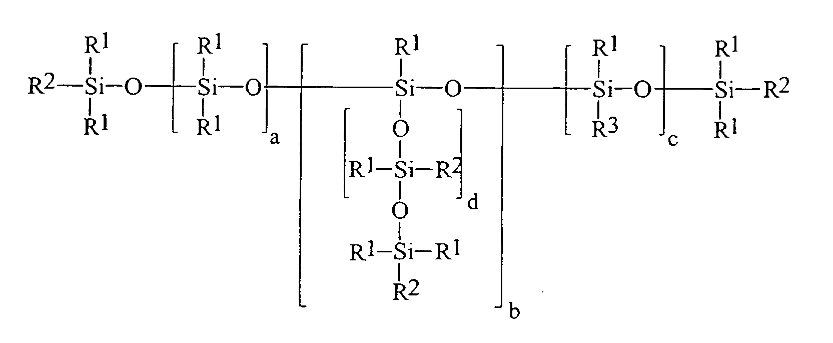 worin
- R¹: gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
- R²: gleiche oder verschiedene Reste R¹ oder R³,
- R³: gleiche oder verschiedene einfach oder mehrfach (meth)acrylierte Monoalkoxylate oder (meth)acrylierte Polyalkoxylate, oder eine Mischung derselbigen, oder eine Mischung der einfach oder mehrfach (meth)acrylierten Monoalkoxylate oder Polyalkoxylate mit beliebigen anderen Alkoxylaten, die ausgewählt sind aus der Gruppe der linearen oder verzweigten, gesättigten, ein- oder mehrfach ungesättigten, aromatischen, aliphatisch-aromatischen Mono- oder Polyalkohole, Polyethermonoalkohole, Polyetherpolyalkohole, Polyestermonoalkohole, Polyesterpolyalkohole, Aminoalkohole, insbesondere N-Alkyl-, Arylamino-Ethylenoxyd-, -Propylenoxyd-Alkohole, N-Alkyl- oder Arylaminoalkoxylate sowie deren Gemische, wobei das Verhältnis der einfach oder mehrfach (meth)acrylierten Monoalkoxylate oder Polyalkoxylate zu den beliebigen anderen Alkoxylaten so gewählt wird, dass mindestens ein einfach oder mehrfach (meth)acrylierter Monoalkoxylat- oder Polyalkoxylat-Rest in dem Organopolysiloxan enthalten ist,
- a: 0 bis 1.000,vorzugsweise 0 bis 500, insbesondere 0 bis 300,
- b: 0 bis 5,
- c: 1 bis 200,vorzugsweise 2 bis 100, insbesondere 3 bis 80,
- d: 0 bis 1.000, vorzugsweise 0 bis 500, insbesondere 0 bis 300
sind, wobei mindestens einer der Reste R² oder R³ ein (meth)-acrylierter Monoalkoxylat- oder Polyalkoxylat-Rest ist.

Es wurde nun gefunden, dass diese als Additive in strahlenhärtbaren Beschichtungen eingesetzt werden können. Sie weisen nicht die Nachteile der Additive des Standes der Technik auf und bewirken in strahlenhärtbaren Beschichtungen eine erhebliche Verbesserung der Kratzfestigkeit und Gleitfähigkeit sowie des Release-Verhaltens.

Ein Gegenstand der vorliegenden Erfindung ist daher die Verwendung von Organopolysiloxanyl(meth)acrylaten, die durch Umsetzung von SiH-Gruppen enthaltenden Polysiloxanen der allgemeinen durchschnittlichen Formel (II) 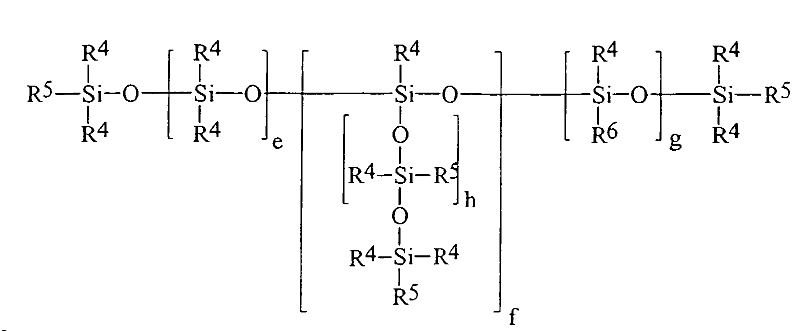 in denen
- R⁴: gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen, vorzugsweise ein Alkylrest mit 1 bis 5 C-Atomen, insbesondere der Methylrest ist,
- R⁵: H oder R⁴,
- R⁶: H,
- e: 0 bis 1.000, vorzugsweise 5 bis 500, insbesondere 10 bis 300, insbesondere bevorzugt 10 bis 200,
- f: 0 bis 5, vorzugsweise < 2
- g: 0 bis 200, vorzugsweise 0 bis 100, insbesondere 0 bis 80, insbesondere bevorzugt 0 bis 50,
- h: 0 bis 1.000, vorzugsweise 0 bis 500, insbesondere 0 bis 300, insbesondere < 100
sind, wobei mindestens ein Rest R⁵ oder R⁶ = H sein muss,
mit einem Alkohol, der ausgewählt ist aus der Gruppe der einfach oder mehrfach (meth)acrylierten Monoalkohole oder Polyalkohole, oder aus einer Mischung derselbigen, oder aus Mischungen der einfach oder mehrfach (meth)acrylierten Monoalkohole oder Polyalkohole mit mindestens einem anderen Alkohol, ausgewählt aus der Gruppe der linearen oder verzweigten, gesättigten, ein- oder mehrfach ungesättigten, aromatischen, aliphatisch-aromatischen Mono- oder Polyalkohole, Polyethermonoalkohole, Polyetherpolyalkohole, Polyestermonoalkohole, Polyesterpolyalkohole, Aminoalkohole, insbesondere N-Alkyl-, Arylamino-EO-, -PO-Alkoholen, N-Alkyl- oder Arylaminoalkohole sowie deren Gemischen, wobei in einem oder mehreren Verfahrensschritten unter Einsatz eines lewissauren Katalysators oder eines Katalysators bestehend aus einer Carbonsäure und Salzen von Carbonsäuren die vorhandenen SiH-Gruppen des Polysiloxans teilweise oder vollständig durch Alkoholatreste der eingesetzten Alkohole ersetzt werden, in Mengen von 0,01 bis 10 Gew.-% als Additive in strahlenhärtenden Beschichtungen.

Ein bevorzugter Gegenstand der Erfindung ist die Verwendung von Organopolysiloxanyl(meth)acrylaten, gemäß Anspruch 1, welcher dadurch gekennzeichnet ist, dass als Organopolysiloxanyl(meth)acrylate Verbindungen der allgemeinen durchschnittlichen Formel (I) verwendet werden, 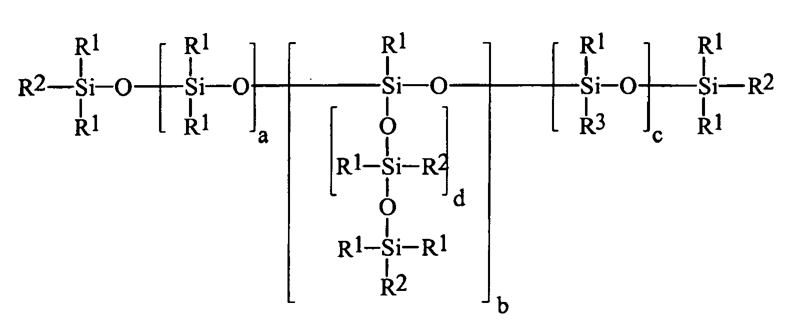 worin
- R¹: gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen, vorzugsweise ein Alkylrest mit 1 bis 5 C-Atomen, insbesondere der Methylrest ist,
- R²: gleiche oder verschiedene Reste R¹ oder R³,
- R³: gleiche oder verschiedene einfach oder mehrfach (meth)acrylierte Monoalkoxylate oder (meth)acrylierte Polyalkoxylate, oder eine Mischung derselbigen, oder eine Mischung der einfach oder mehrfach (meth)acrylierten Monoalkoxylate oder Polyalkoxylate mit mindestens einem beliebigen anderen Alkoxylat, ausgewählt aus der Gruppe basierend auf linearen oder verzweigten, gesättigten, ein- oder mehrfach ungesättigten, aromatischen, aliphatischaromatischen Mono- oder Polyalkoholen, Polyethermonoalkoholen, Polyetherpolyalkoholen, Polyestermonoalkoholen, Polyesterpolyalkoholen, Aminoalkoholen, insbesondere N-Alkyl-, Arylamino-Ethylenoxyd-, -Propylenoxyd-Alkoholen, N-Alkyl- oder Arylaminoalkoxylate sowie deren Gemische, wobei das Verhältnis der einfach oder mehrfach (meth)acrylierten Monoalkoxylate oder Polyalkoxylate zu den beliebigen anderen Alkoxylaten so gewählt wird, dass mindestens ein einfach oder mehrfach (meth)acrylierter Monoalkoxylat- oder Polyalkoxylat-Rest in dem Organopolysiloxan enthalten ist, vorzugsweise mindestens eine Verbindung aus der Gruppe 2-Hydroxyethylacrylsäureester, Hydroxypropylacrylsäureester, Hydroxybutylacrylsäureester, monoacrylierten Polyether (Bisomer PEA 6), monoacrylierten Di- oder Polycaprolactone (Sartomer SR 495),
- a: 0 bis 1.000, vorzugsweise 5 bis 500, insbesondere 10 bis 300, insbesondere bevorzugt 10 bis 200,
- b: 0 bis 5, vorzugsweise < 2
- c: 1 bis 200, vorzugsweise 1 bis 100, insbesondere 1 bis 80, insbesondere bevorzugt 1 bis 50,
- d: 0 bis 1.000, vorzugsweise 0 bis 500, insbesondere 0 bis 300, insbesondere bevorzugt 0 bis 100
sind, wobei mindestens einer der Reste R² oder R³ ein (meth)acrylierter Monoalkoxylat- oder Polyalkoxylat-Rest ist, in Mengen von 0,01 bis 10 Gew.-% als Additive in strahlenhärtenden Beschichtungen.

Weitere Gegenstände der Erfindung sind gekennzeichnet durch den Inhalt der Ansprüche.

Bevorzugte wirksame lewissaure Katalysatoren für die Herstellung von Verbindungen mit sowohl endständigen als auch mittelständigen (Meth)acrylatresten sind die lewissauren Elementverbindungen der III. Hauptgruppe insbesondere Bor-haltige und/oder aluminiumhaltige Elementverbindungen.

Eine bevorzugte Ausführungsform sieht vor, dass fluorierte und/oder nicht fluorierte Organoborverbindungen eingesetzt werden.

Die Umsetzung der endständigen und/oder seitenständigen Si-H-funktionellen Siloxane mit den zuvor definierten Alkoholen mit Bor-haltigen Lewissäuren werden nach der allgemeinen Synthesevorschrift gemäß DE-A-103 59 764 durchgeführt:

Der Alkohol wird mit oder ohne Lösungsmittel und dem Bor-Katalysator unter Schutzgas vorgelegt und auf 70°C bis 150 °C erhitzt. Anschließend wird das Si-H-funktionelle Siloxan zugetropft und die Reaktionsmischung bis zur vollständigen Umsetzung gerührt. Die Reaktionsführung kann dahin modifiziert werden, dass der Alkohol, der Bor-Katalysator und das Si-H-funktionelle Siloxan mit oder ohne Lösungsmittel vorlegt und auf Reaktionstemperatur erwärmt werden (Eintopfreaktion).
Des Weiteren können diese Umsetzungen unter Verwendung von Schutzgas, Magerluft oder Inhibitoren durchgeführt werden.

Weitere wirksame Katalysatoren, insbesonders für Verbindungen mit endständigen und/oder seitenständigen (Meth)acrylatresten, sind Mischungen aus mindestens einer Säure und mindestens einem Salz einer Säure, bevorzugt Mischungen aus mindestens einer organischen Säure, wie z. B. einer Carbonsäure, Dithiocarbonsäure, Aryl-/Alkylsulfonsäure, Aryl-/Alkylphosphonsäure oder Aryl-/Alkylsulfinsäure und mindestens einem Metall- oder Ammoniumsalz einer organischen Säure, wobei das Metallkation ein- oder mehrwertig sein kann, eingesetzt. Das Verhältnis von Salz und Säure kann in weiten Bereichen variiert werden, bevorzugt ist ein Stoffmengenverhältnis von Säure zu Salz im Bereich von 1 : 5 bis 5 : 1, insbesondere 2 : 3 bis 3 : 2 Moläquivalenten. Weiterhin können mehrwertige Säuren oder Mischungen aus ein- und mehrwertigen Säuren sowie die entsprechenden Salze mit ein- oder mehrwertigen Kationen eingesetzt werden. Der pKs-Wert der Säure sollte nicht negativ sein, da es sonst zur Equilibrierung des Siloxangrundgerüsts kommt.

Eine besonders bevorzugte Ausführungsform der Erfindung besteht in der Verwendung von katalytischen Systemen, bestehend aus einer 1 : 1 Mischung aus einer Carbonsäure und ihrem Metall- oder Ammoniumsalz, wobei das Metall ein Hauptgruppenelement oder Übergangsmetall, besonders bevorzugt ein Metall der 1. und 2. Hauptgruppe ist. Der organische Rest der Carbonsäure ist ausgewählt aus cyclischen, linearen oder verzweigten, gesättigten, ein- oder mehrfach ungesättigten Alkyl-, Aryl-, Alkylaryl- oder Arylalkylresten mit 1 bis 40, insbesondere 1 bis 20 Kohlenstoffatomen.

Die Umsetzung der endständigen und/oder seitenständigen Si-H-funktionellen Siloxane mit den zuvor definierten Alkoholen mit Mischungen aus mindestens einer Säure und mindestens einem Salz einer Säure werden nach der allgemeinen Synthesevorschrift DE-A-103 59 764 durchgeführt:

Der Alkohol wird mit oder ohne Lösungsmittel und dem Katalysator (Mischungen aus mindestens einer Säure und mindestens einem Salz einer Säure) vorgelegt und auf 70°C bis 150°C erhitzt. Anschließend wird das Si-H-funktionelle Siloxan zugetropft und die Reaktionsmischung bis zur vollständigen Umsetzung gerührt. Die Reaktionsführung kann dahin modifiziert werden, dass eine Eintopfreaktion durchgeführt wird, gekennzeichnet dadurch, dass der Alkohol, der Katalysator und das Si-H-funktionelle Siloxan mit oder ohne Lösungsmittel vorlegt werden.

Einzelne oder Mischungen von erfindungsgemäßen via SiOC-Chemie modifizierten (meth)acrylierten Polysiloxanen können in beliebiger Mischung mit beliebig vielen anderen (meth)acrylierten Polysiloxanen nach dem Stand der Technik gemischt werden.

Die Verbindungen werden, gegebenenfalls als Mischungen, in Mengen von 0,01 bis 10 Gew.-%, als Additive in strahlenhärtbaren Beschichtungen eingesetzt. Sie weisen nicht die Nachteile der Additive des Standes der Technik auf und bewirken in strahlenhärtbaren Beschichtungen eine erhebliche Verbesserung der Kratzfestigkeit und Gleitfähigkeit sowie des Release-Verhaltens.

Sie können in üblicher Weise mit Härtungsinitiatoren, Füllstoffen, Pigmenten, anderen an sich bekannten Acrylatsystemen und weiteren üblichen Zusatzstoffen compoundiert werden. Die Verbindungen können dreidimensional durch freie Radikale vernetzt werden und härten thermisch unter Zusatz von z. B. Peroxiden oder unter Einfluss energiereicher Strahlung, wie UV- oder Elektronenstrahlung, innerhalb kürzester Zeit zu mechanisch und chemisch widerstandsfähigen Schichten aus, die bei geeigneter Zusammensetzung der Verbindungen vorbestimmbare abhäsive Eigenschaften aufweisen. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivate, oder Benzoin und entsprechende substituierte Benzoinderivate.

Photoinitiatoren und/oder Photosensibilisatoren werden in den die Organopolysiloxane enthaltenden Zusammensetzungen vorzugsweise in Mengen von 0,01 bis 10 Gew.-%, insbesondere von 0,1 bis 5 Gew.-%, jeweils bezogen auf das Gewicht der acrylatfunktionellen Organopolysiloxane, verwendet.

Nachfolgende Beispiele sollen zur Verdeutlichung der Erfindung dienen, sie stellen jedoch keinerlei Einschränkung dar.

### Beispiele:

### Beispiel 1:

Umsetzung von einem mittelständigen und endständigen Si-H-funktionellen Siloxan (e = 166, g = 10, R⁵ = H) mit 2-Hydroxyethylacrylsäureester (CH₂=CH-C(O)-O-CH₂-CH₂-OH) unter Verwendung eines Bor-haltigen Katalysators:
15,7 g 2-Hydroxyethylacrylsäureester werden in einem Vierhalskolben, ausgestattet mit Rührer, Intensivkühler, Thermometer und Tropftrichter, zusammen mit 0,053 g Tris(pentafluorphenyl)boran als Katalysator, 300 ppm Methylhydrochinon und 83,4 g Toluol in inerter Atmosphäre auf 90 °C aufgeheizt. Bei Erreichen der Temperatur werden 123,3 g endständig und mittelständig Si-H-funktionalisiertes Polydimethylsiloxan (e = 166, g = 10, R⁵ = H) der allgemeinen Formel HMe₂SiO(SiMeHO)₁₀(SiMe₂O)₁₆₆SiMe₂H (SiH-Wert : 0,081 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, leicht trübe Flüssigkeit.

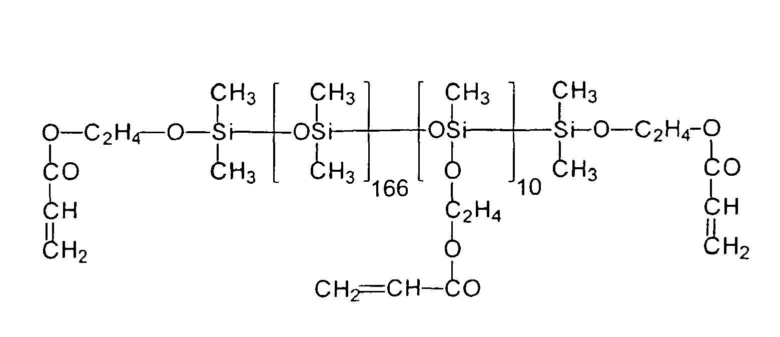

### Beispiel 2:

Umsetzung von einem mittelständigen und endständigen Si-H-funktionellen Siloxan (e = 190, g = 10, R⁵ = H) mit Hydroxypropylacrylsäureester (CH₂=CH-C(O)-O-C₃H₆-OH) unter Verwendung eines Bor-haltigen Katalysators:
16,91 g Hydroxypropylacrylsäureester werden in einem Vierhalskolben, ausgestattet mit Rührer, Intensivkühler, Thermometer und Tropftrichter, zusammen mit 0,051 g Tris(pentafluorphenyl)boran als Katalysator, 300 ppm Methylhydrochinon und 30 g Toluol in inerter Atmosphäre auf 90°C aufgeheizt. Bei Erreichen der Temperatur werden 132,6 g endständig und mittelständig Si-H-funktionalisiertes Polydimethylsiloxan (e = 190, g = 10, R⁵ = H) der allgemeinen Formel HMe₂SiO(SiMeHO)₁₀(SiMe₂O)₁₉₀SiMe₂H (SiH-Wert: 0,076 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, klare Flüssigkeit.

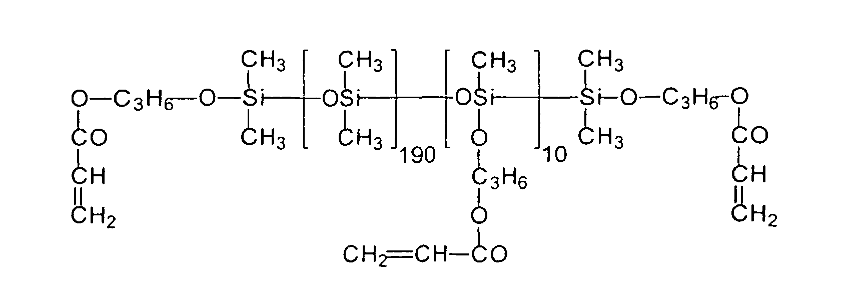

### Beispiel 3:

Umsetzung von einem mittelständigen und endständigen Si-H-funktionellen Siloxan (e = 166, g = 10, R⁵ = H) mit 4-Hydroxybutylacrylsäureester (CH₂=CH-C(O)-O-C₄H₈-OH) unter Verwendung eines Bor-haltigen Katalysators:
151,4 g 2-Hydroxybutylacrylsäureester werden in einem Vierhalskolben, ausgestattet mit Rührer, Intensivkühler, Thermometer und Tropftrichter, zusammen mit 0,051 g Tris(pentafluorphenyl)boran als Katalysator, 300 ppm Methylhydrochinon und 259,4 g Toluol in inerter Atmosphäre auf 90 °C aufgeheizt. Bei Erreichen der Temperatur werden 1.145,3 g endständig und mittelständig Si-H-funktionalisiertes Polydimethylsiloxan (e = 166, g = 10, R⁵ = H) der allgemeinen Formel HMe₂SiO(SiMeHO)₁₀(SiMe₂O)₁₆₆SiMe₂H (SiH-Wert: 0,081 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, klare Flüssigkeit.

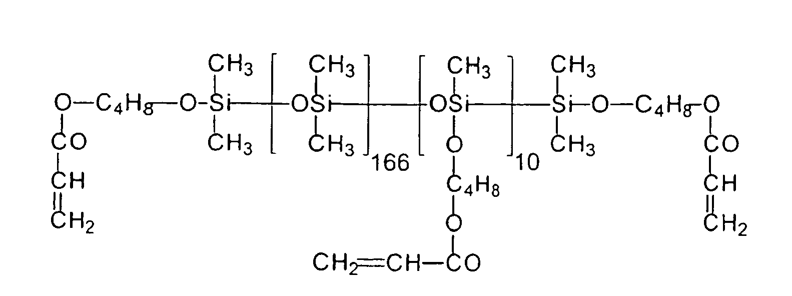

### Beispiel 4:

Umsetzung von einem mittelständigen Si-H-funktionellen Siloxan (e = 28, g = 2, R⁵ = Me) mit einem monoacrylierten Polyether (Bisomer PEA 6) unter Verwendung eines Bor-haltigen Katalysators:
23 g Bisomer PEA 6 werden in einem Vierhalskolben, ausgestattet mit Rührer, Intensivkühler, Thermometer und Tropftrichter, zusammen mit 0,034 g Tris(pentafluorphenyl)boran als Katalysator und 500 ppm Methylhydrochinon in inerter Atmosphäre auf 110 °C aufgeheizt. Bei Erreichen der Temperatur werden 78,7 g mittelständig Si-H-funktionalisiertes Polydimethylsiloxan (e = 28, g = 2, R⁵= Me) der allgemeinen Formel Me₃SiO(SiMeH)₂(SiMe₂O)₂₈SiMe₃ (SiH-Wert: 0,0854 %) innerhalb von 15 Minuten zugetropft. Nach beendeter Zugabe und Abkühlen lag der Umsatz, entsprechend der SiH-Wert Methode bei 100 %.

Nach Filtration unter Verwendung von 1% Harbolite Filterhilfe und anschließende Abdestillation der flüchtigen Verbindungen erhält man eine wasserklare, farblose Flüssigkeit.

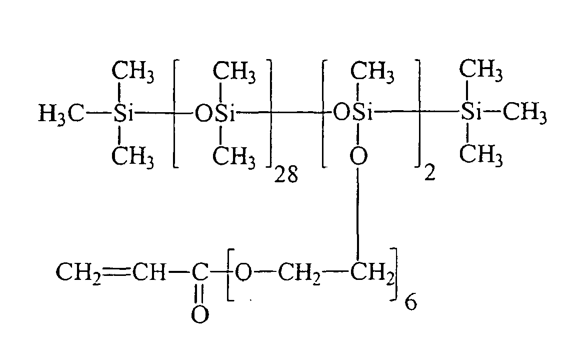

### Beispiel 5:

Umsetzung von einem mittelständigen Si-H-funktionellen Siloxan (e = 27, g = 3, R⁵ = Me) mit einem monoacrylierten Polyether (Bisomer PEA 6) unter Verwendung eines Bor-haltigen Katalysators:
60,4 g Bisomer PEA 6 werden in einem Vierhalskolben, ausgestattet mit Rührer, Intensivkühler, Thermometer und Tropftrichter, zusammen mit 0,09 g Tris(pentafluorphenyl)boran als Katalysator und 500 ppm Methylhydrochinon in inerter Atmosphäre auf 110 °C aufgeheizt. Bei Erreichen der Temperatur werden 138,2 g mittelständig Si-H-funktionalisiertes Polydimethylsiloxan (e = 27, g = 3, R⁵ = Me) der allgemeinen Formel Me₃SiO(SiMeH)₃(SiMe₂O)₂₇SiMe₃ (SiH-Wert: 0,128 %) innerhalb von 15 Minuten zugetropft. Nach beendeter Zugabe und Abkühlen lag der Umsatz, entsprechend der SiH-Wert Methode bei 100 %.

Nach Filtration unter Verwendung von 1 % Harbolite Filterhilfe und anschließender Abdestillation der flüchtigen Verbindungen erhält man eine wasserklare, farblose Flüssigkeit.

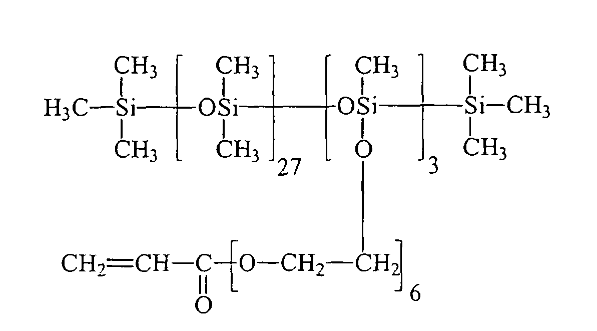

### Beispiel 6:

Umsetzung von einem mittelständigen Si-H-funktionellen Siloxan (e = 26, g = 4, R⁵ = Me) mit einem monoacrylierten Polyether (Bisomer PEA 6) unter Verwendung eines Bor-haltigen Katalysators:
75 g Bisomer PEA 6 werden in einem Vierhalskolben, ausgestattet mit Rührer, Intensivkühler, Thermometer und Tropftrichter, zusammen mit 0,11 g Tris(pentafluorphenyl)boran als Katalysator und 500 ppm Methylhydrochinon in inerter Atmosphäre auf 110 °C aufgeheizt. Bei Erreichen der Temperatur werden 126,7 g mittelständig Si-H-funktionalisiertes Polydimethylsiloxan (e = 26, g = 4, R⁵ = Me) der allgemeinen Formel Me₃SiO(SiMeH)₄(SiMe₂O)₂₆SiMe₃ (SiH-Wert: 0,173 %) innerhalb von 15 Minuten zugetropft. Nach beendeter Zugabe und Abkühlen lag der Umsatz, entsprechend der SiH-Wert Methode bei 100 %.

Nach Filtration unter Verwendung von 1 % Harbolite Filterhilfe und anschließender Abdestillation der flüchtigen Verbindungen erhält man eine wasserklare, farblose Flüssigkeit.

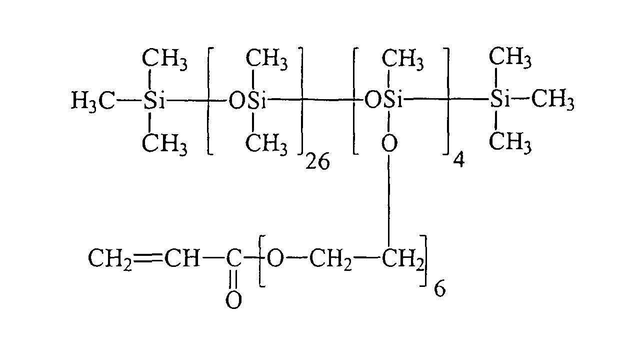

### Beispiel 7:

Umsetzung von einem mittelständigen Si-H-funktionellen Siloxan (e = 25, g = 5, R⁵ = Me) mit einem monoacrylierten Polyether (Bisomer PEA 6) unter Verwendung eines Bor-haltigen Katalysators:
86,1 g Bisomer PEA 6 werden in einem Vierhalskolben, ausgestattet mit Rührer, Intensivkühler, Thermometer und Tropftrichter, zusammen mit 0,128 g Tris(pentafluorphenyl)boran als Katalysator und 500 ppm Methylhydrochinon in inerter Atmosphäre auf 110 °C aufgeheizt. Bei Erreichen der Temperatur werden 114,7 g mittelständig Si-H-funktionalisiertes Polydimethylsiloxan (e = 25, g = 5, R⁵ = Me) der allgemeinen Formel Me₃SiO(SiMeH)₅(SiMe₂O)₂₅SiMe₃ (SiH-Wert: 0,22 %) innerhalb von 15 Minuten zugetropft. Nach beendeter Zugabe und Abkühlen lag der Umsatz, entsprechend der SiH-Wert Methode bei 100 %.

Nach Filtration unter Verwendung von 1 % Harbolite Filterhilfe und anschließender Abdestillation der flüchtigen Verbindungen erhält man eine wasserklare, farblose Flüssigkeit.

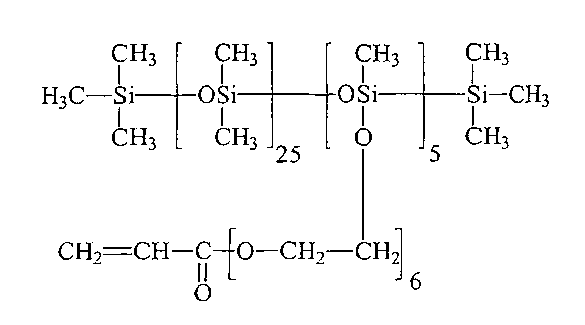

### Beispiel 8:

Umsetzung von einem mittelständigen Si-H-funktionellen Siloxan (e = 13, g = 5, R⁵ = Me) mit einem monoacrylierten Polyether (Bisomer PEA 6) unter Verwendung eines Bor-haltigen Katalysators:
32,6 g Bisomer PEA 6 werden in einem Vierhalskolben, ausgestattet mit Rührer, Intensivkühler, Thermometer und Tropftrichter, zusammen mit 0,038 g Tris(pentafluorphenyl)boran als Katalysator und 500 ppm Methylhydrochinon in inerter Atmosphäre auf 110 °C aufgeheizt. Bei Erreichen der Temperatur werden 28,6 g mittelständig Si-H-funktionalisiertes Polydimethylsiloxan (e = 13, g = 5, R⁵ = Me) der allgemeinen Formel Me₃SiO(SiMeH)₅(SiMe₂O)₁₃SiMe₃ (SiH-Wert: 0,353 %) innerhalb von 15 Minuten zugetropft. Nach beendeter Zugabe und Abkühlen lag der Umsatz, entsprechend der SiH-Wert Methode bei 100 %.

Nach Filtration unter Verwendung von 1 % Harbolite Filterhilfe und anschließender Abdestillation der flüchtigen Verbindungen erhält man eine wasserklare, farblose Flüssigkeit.

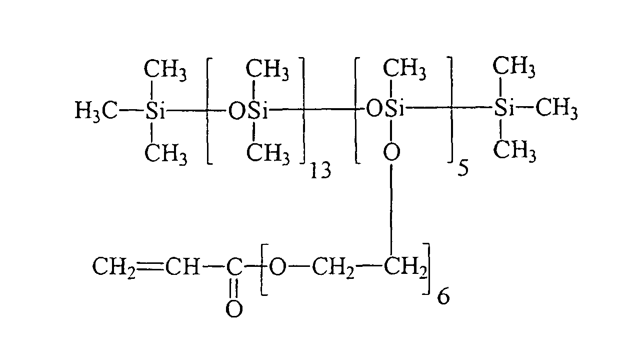

### Beispiel 9:

Umsetzung von einem endständigen Si-H-funktionellen Siloxan (e = 18, R⁵ = H) mit einem monoacrylierten Dicaprolacton (Sartomer SR 495) unter Verwendung eines Bor-haltigen Katalysators:
34,2 g Sartomer SR 495 werden in einem Vierhalskolben, ausgestattet mit Rührer, Intensivkühler, Thermometer und Tropftrichter, zusammen mit 0,038 g Tris(pentafluorphenyl)boran als Katalysator und 500 ppm Methylhydrochinon in inerter Atmosphäre auf 110 °C aufgeheizt. Bei Erreichen der Temperatur werden 71,5 g endständig Si-H-funktionalisiertes Polydimethylsiloxan (e = 18, R⁵ = H) der allgemeinen Formel HMe₂Si (SiMe₂O)₁₈SiMe₂H (SiH-Wert: 0, 141 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine wasserklare, farblose Flüssigkeit.

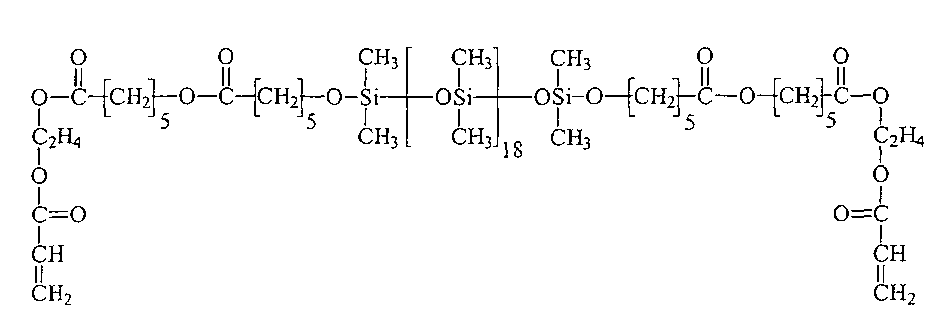

### Beispiel 10:

Umsetzung von einem endständigen Si-H-funktionellen Siloxan (e = 18, R⁵ = H) mit 2-Hydroxyethylacrylsäureester unter Verwendung eines Bor-haltigen Katalysators:
116,1 g 2-Hydroxyethylacrylsäureester werden in einem Vierhalskolben, ausgestattet mit Rührer, Intensivkühler, Thermometer und Tropftrichter, zusammen mit 0,512 g Tris(pentafluorphenyl)boran als Katalysator, 300 ppm Methylhydrochinon und 526,6 g Toluol in inerter Atmosphäre auf 90 °C aufgeheizt. Bei Erreichen der Temperatur werden 725,1 g endständig Si-H-funktionalisiertes Polydimethylsiloxan (e = 18, R⁵ = H) der allgemeinen Formel HMe₂SiO(SiMe₂O)₁₈SiMe₂H (SiH-Wert: 0,139 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine wasserklare, farblose Flüssigkeit.

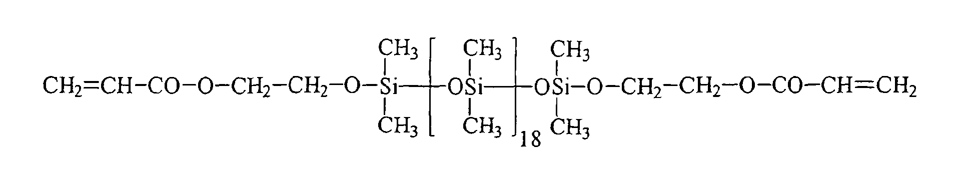

### Beispiel 11:

Umsetzung von einem endständigen Si-H-funktionellen Siloxan (e = 18, R⁵ = H) mit einem acrylierten Polyether (Bisomer PEA 6) unter Verwendung eines Bor-haltigen Katalysators:
328,1 g Bisomer PEA 6 werden in einem Vierhalskolben, ausgestattet mit Rührer, Intensivkühler, Thermometer und Tropftrichter, zusammen mit 0,512 g Tris(pentafluorphenyl)boran als Katalysator, 500 ppm Methylhydrochinon, 500 ppm Phenothiazin und 526,6 g Toluol in inerter Atmosphäre auf 90 °C aufgeheizt. Bei Erreichen der Temperatur werden 725,1 g endständig Si-H-funktionalisiertes Polydimethylsiloxan (e = 18, R⁵ = H) der allgemeinen Formel HMe₂SiO(SiMe₂O)₁₈SiMe₂H (SiH-Wert: 0,139 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine wasserklare, farblose Flüssigkeit.

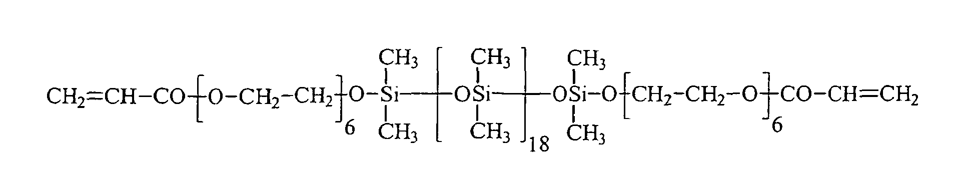

### Beispiel 12:

Umsetzung von einem mittelständigen Si-H-funktionellen Siloxan (e = 95, g = 15, R⁵ = Me) mit 2-Hydroxyethylacrylsäureester unter Verwendung eines Bor-haltigen Katalysators:
88,8 g 2-Hydroxyethylacrylsäureester werden in einem Vierhalskolben, ausgestattet mit Rührer, Intensivkühler, Thermometer und Tropftrichter, zusammen mit 0,15 g Tris(pentafluorphenyl)boran als Katalysator, 300 ppm Methylhydrochinon und 83,6 g Toluol in inerter Atmosphäre auf 90 °C aufgeheizt. Bei Erreichen der Temperatur werden 329,4 g mittelständig Si-H-funktionalisiertes Polydimethylsiloxan (e = 95, g = 15, R⁵ = Me) der allgemeinen Formel Me₃SiO(SiMeHO)₁₅(SiMe₂O)₉₅SiMe₃ (SiH-Wert: 0,18 %) innerhalb von 25 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, leicht trübe Flüssigkeit.

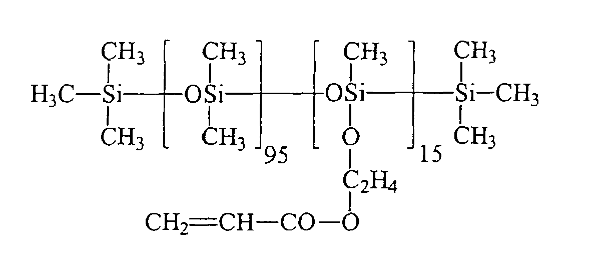

### Beispiel 13:

Umsetzung von einem mittelständigen Si-H-funktionellen Siloxan (e = 160, g = 10, R⁵ = Me) mit 2-Hydroxyethylacrylsäureester unter Verwendung eines Bor-haltigen Katalysators:
87 g 2-Hydroxyethylacrylsäureester werden in einem Vierhalskolben, ausgestattet mit Rührer, Intensivkühler, Thermometer und Tropftrichter, zusammen mit 0,366 g Tris(pentafluorphenyl)boran als Katalysator, 300 ppm Methylhydrochinon und 200 g Toluol in inerter Atmosphäre auf 90 °C aufgeheizt. Bei Erreichen der Temperatur werden 898 g mittelständig Si-H-funktionalisiertes Polydimethylsiloxan (e = 160, g = 10, R⁵ = Me) der allgemeinen Formel Me₃SiO(SiMeHO)₁₀(SiMe₂O)₁₆₀SiMe₃ (SiH-Wert: 0,08 %) innerhalb von 25 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, klare Flüssigkeit.

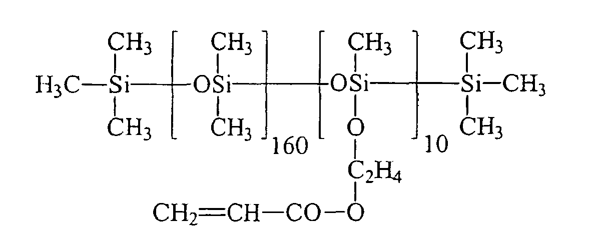

### Beispiel 14:

Umsetzung von einem end- und mittelständigen Si-H-funktionellen Siloxan (e = 190, g = 35, R⁵ = H) mit 2-Hydroxyethylacrylsäureester unter Verwendung eines Bor-haltigen Katalysators:
30,5 g 2-Hydroxyethylacrylsäureester werden in einem Vierhalskolben, ausgestattet mit Rührer, Intensivkühler, Thermometer und Tropftrichter, zusammen mit 0,128 g Tris(pentafluorphenyl)boran als Katalysator, 300 ppm Methylhydrochinon und 31 g Toluol in inerter Atmosphäre auf 90 °C aufgeheizt. Bei Erreichen der Temperatur werden 124,8 g end- und mittelständig Si-H-funktionalisiertes Polydimethylsiloxan (e = 190, g = 35, R⁵ = H) der allgemeinen Formel Me₂HSiO(SiMeHO)₃₅(SiMe₂O)₁₉₀SiHMe₂ (SiH-Wert: 0,2 %) innerhalb von 25 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, leicht trübe Flüssigkeit.

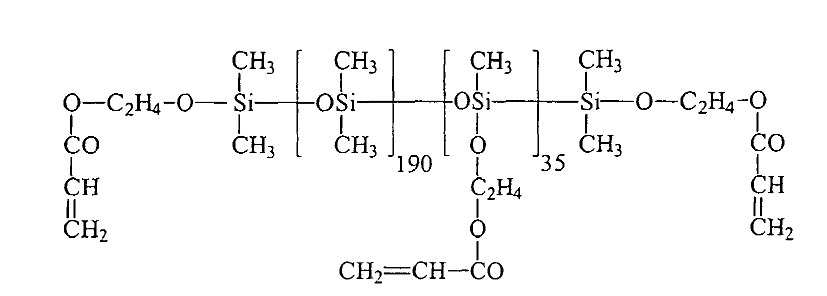

### Beispiel 15:

Umsetzung von einem mittelständigen Si-H-funktionellen Siloxan (e = 87, g = 18, R⁵ = Me) mit Hydroxypropylacrylsäureester unter Verwendung eines Bor-haltigen Katalysators:
45,5 g Hydroxypropylacrylsäureester werden in einem Vierhalskolben, ausgestattet mit Rührer, Intensivkühler, Thermometer und Tropftrichter, zusammen mit 0,081 g Tris(pentafluorphenyl)boran als Katalysator, 300 ppm Methylhydrochinon und 60,7 g Toluol in inerter Atmosphäre auf 90 °C aufgeheizt. Bei Erreichen der Temperatur werden 157 g mittelständig Si-H-funktionalisiertes Polydimethylsiloxan (e = 87, g = 18, R⁵ = Me) der allgemeinen Formel Me₃SiO(SiMeHO)₁₈(SiMe₂O)₈₇SiMe₃ (SiH-Wert: 0,214 %) innerhalb von 25 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, klare Flüssigkeit.

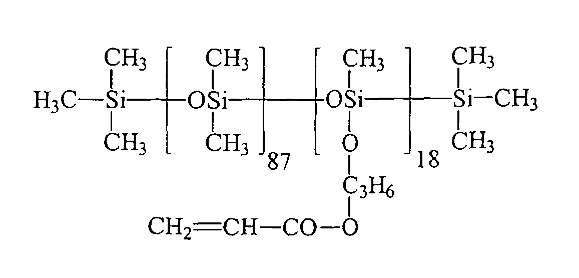

### Beispiel 16:

Umsetzung von einem mittelständigen Si-H-funktionellen Siloxan (e = 11, g = 7, R⁵ = Me) mit 2-Hydroxyethylacrylsäureester unter Verwendung eines Bor-haltigen Katalysators:
40,6 g 2-Hydroxyethylacrylsäureester werden in einem Vierhalskolben, ausgestattet mit Rührer, Intensivkühler, Thermometer und Tropftrichter, zusammen mit 0,128 g Tris(pentafluorphenyl)boran als Katalysator und 300 ppm Methylhydrochinon in inerter Atmosphäre auf 110 °C aufgeheizt. Bei Erreichen der Temperatur werden 67,7 g mittelständig Si-H-funktionalisiertes Polydimethylsiloxan (e = 11, g = 7, R⁵ = Me) der allgemeinen Formel Me₃SiO(SiMeHO)₇(SiMe₂O)₁₁SiMe₃ (SiH-Wert: 0,31 %) innerhalb von 25 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, klare Flüssigkeit.

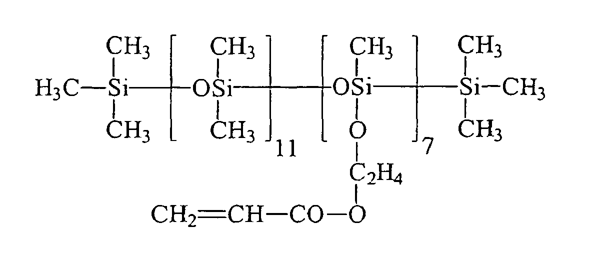

### Beispiel 17:

Umsetzung von einem mittelständigen Si-H-funktionellen Siloxan (e = 13, g = 5, R⁵ = Me) mit 2-Hydroxyethylacrylsäureester unter Verwendung eines Bor-haltigen Katalysators:
24,4 g 2-Hydroxyethylacrylsäureester werden in einem Vierhalskolben, ausgestattet mit Rührer, Intensivkühler, Thermometer und Tropftrichter, zusammen mit 0,077 g Tris(pentafluorphenyl)boran als Katalysator und 300 ppm Methylhydrochinon in inerter Atmosphäre auf 110 °C aufgeheizt. Bei Erreichen der Temperatur werden 57,1 g mittelständig Si-H-funktionalisiertes Polydimethylsiloxan (e = 13, g = 5, R⁵ = Me) der allgemeinen Formel Me₃SiO(SiMeHO)₅(SiMe₂O)₁₃SiMe₃ (SiH-Wert: 0,353 %) innerhalb von 25 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose, klare Flüssigkeit.

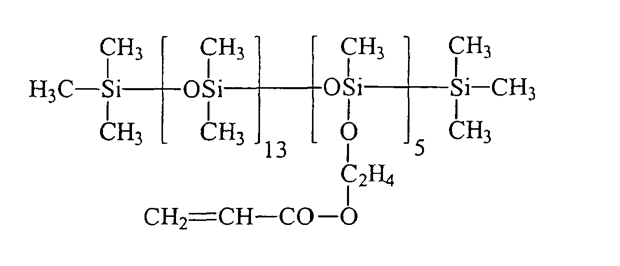

### Beispiel 18:

Umsetzung von einem endständigen Si-H-funktionellen Siloxan (e = 7,2, R⁵ = H) mit einem monoacrylierten Dicaprolacton (Sartomer SR 495) unter Verwendung eines Bor-haltigen Katalysators:
114 g Sartomer SR 495 werden in einem Vierhalskolben, ausgestattet mit Rührer, Intensivkühler, Thermometer und Tropftrichter, zusammen mit 0,102 g Tris(pentafluorphenyl)boran als Katalysator, 113 g Toluol und 500 ppm Methylhydrochinon in inerter Atmosphäre auf 90 °C aufgeheizt. Bei Erreichen der Temperatur werden 111 g endständig Si-H-funktionalisiertes Polydimethylsiloxan (e = 7,2, R⁵ = H) der allgemeinen Formel HMe₂Si(SiMe₂O)_{7.2}SiMe₂H (SiH-Wert: 0,302 %) innerhalb von 15 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine wasserklare, farblose Flüssigkeit.

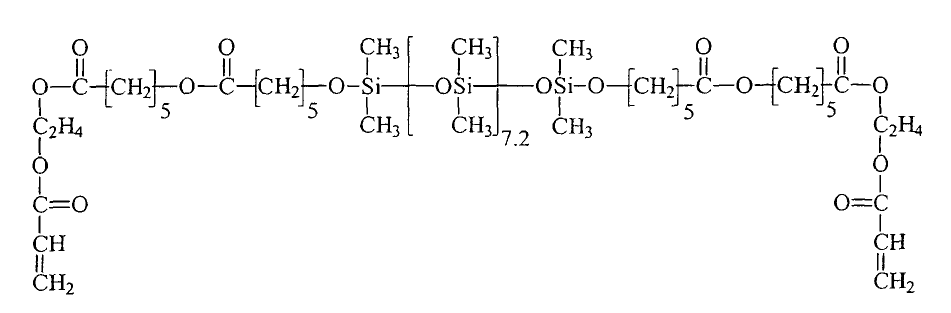

### Vergleichsbeispiel 19 und 20:

Vergleichsbeispiel 19 ist ein handelsübliches Additiv Tego Rad® 2100 der Tego Chemie Service GmbH. Vergleichsbeispiel 20 ist ein handelsübliches Additiv Tego Rad® 2300 der Tego Chemie Service GmbH.

### Vergleichsbeispiel 21:

Umsetzung von einem endständigen Si-Cl-funktionellen Siloxan (N = 20) mit 2-Hydroxyethylacrylsäureester unter Verwendung von Triethylamin:
23,2 g 2-Hydroxyethylacrylsäureester werden in einem Vierhalskolben, ausgestattet mit Rührer, Intensivkühler, Thermometer und Tropftrichter, zusammen mit 500 ppm Methylhydrochinon und 500 ppm Phenothiazin in inerter Atmosphäre auf 90 °C aufgeheizt. Bei Erreichen der Temperatur werden 116 g endständig Si-Cl-funktionalisiertes Polydimethylsiloxan (e = 18, R⁵ = C1) der allgemeinen Formel ClMe₂SiO(SiMe₂O)₁₈SiMe₂Cl innerhalb von 30 Minuten zugetropft, und die dabei entstehende HCl durch Anlegen von Vakuum abgezogen. Nach 1 h Reaktionszeit wurde mit Triethylamin neutralisiert, mit Toluol das Umsetzungsprodukt verdünnt und filtriert.

Nach Abdestillation der flüchtigen Verbindungen erhält man eine leicht gelbe Flüssigkeit.

Nach 14 Tagen Lagerung zeigt das zuvor klare Produkt eine Trübung. Eine Geruchsbelästigung durch Triethylaminreste ist wahrnehmbar.

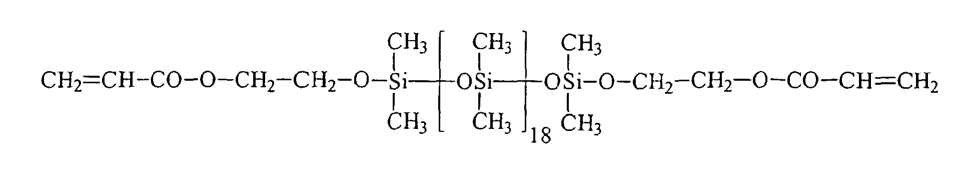

### Vergleichsbeispiel 22:

Umsetzung von einem endständigen Si-Cl-funktionellen Siloxan (N = 20) mit einem acrylierten Polyether (Bisomer PEA 6) unter Verwendung von Triethylamin:
53,2 g Bisomer PEA6 werden in einem Vierhalskolben, ausgestattet mit Rührer, Intensivkühler, Thermometer und Tropftrichter, zusammen mit 500 ppm Methylhydrochinon und 500 ppm Phenothiazin in inerter Atmosphäre auf 90 °C aufgeheizt. Bei Erreichen der Temperatur werden 116 g endständig Si-Cl-funktionalisiertes Polydimethylsiloxan (e = 18, R⁵ = Cl) der allgemeinen Formel ClMe₂SiO(SiMe₂O)₁₈SiMe₂Cl innerhalb von 30 Minuten zugetropft und die dabei entstehende HCI durch Anlegen von Vakuum abgezogen. Nach 1 h Reaktionszeit wurde mit Triethylamin neutralisiert, mit Toluol das Umsetzungsprodukt verdünnt und filtriert. Nach der Abdestillation der flüchtigen Verbindungen erhält man eine leicht gelbe Flüssigkeit.

Nach 14 Tagen Lagerung zeigt das zuvor klare Produkt eine Trübung. Eine Geruchsbelästigung durch Triethylaminreste ist wahrnehmbar.

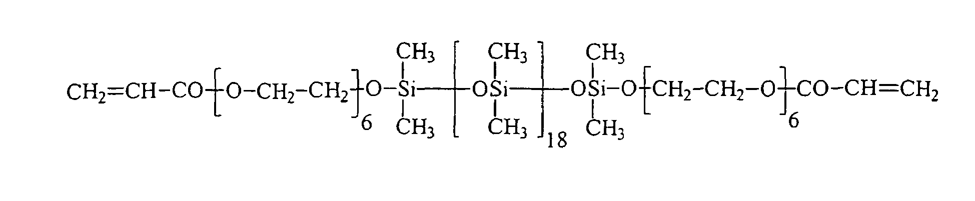

### Beispiel 23:

Umsetzung von einem endständigen Si-H-funktionellen Siloxan (e = 98, R⁵ = H) mit Pentaerithritoltriacrylat (PETTriA) unter Verwendung eines Bor-haltigen Katalysators:
99,5 g Pentaerithritoltriacrylat werden in einem Vierhalskolben, ausgestattet mit Rührer, Intensivkühler, Thermometer und Tropftrichter, zusammen mit 0,085 g Tris(pentafluorphenyl)boran als Katalysator, 500 ppm Methylhydrochinon und 616,5 g Toluol in inerter Atmosphäre auf 90 °C aufgeheizt. Bei Erreichen der Temperatur werden 616,5 g endständig Si-H-funktionalisiertes Polydimethylsiloxan (e = 98, R⁵ = H) der allgemeinen Formel HMe₂SiO(SiMe₂O)₉₈SiMe₂H (SiH-Wert: 0,0272 %) innerhalb von 30 Minuten zugetropft. Nach beendeter Zugabe und Abkühlen lag der Umsatz, entsprechend der SiH-Wert Methode bei 100 %.

Nach Abdestillation der flüchtigen Verbindungen erhält man eine farblose Flüssigkeit.

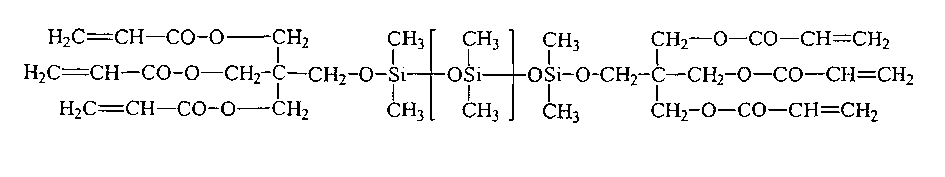

Im Folgenden werden die anwendungstechnischen Eigenschaften verschiedener erfindungsgemäß zu verwendender Verbindungen im Vergleich zu nichterfindungsgemäßen Verbindungen gezeigt.

Als erfindungsgemäß zu verwendende Verbindungen wurden die Verbindungen 1 bis 18 und 23 getestet.

Als nichterfindungsgemäße Verbindungen gemäß dem Stand der Technik wurden folgende Additive mitverwendet:
Handelsübliche Additive: Verbindung 19: Tego Rad® 2100 (Tego Chemie Service GmbH) und Verbindung 20: Tego Rad® 2300 (Tego Chemie Service GmbH). Beide Verbindungen wurden über eine Si-C-Verknüpfung hergestellt.

Si-O-C-verknüpfte Verbindungen die via SiCl-Chemie hergestellt wurden sind als Verbindung 21 und Verbindung 22 mitverwendet.

Zur Überprüfung der anwendungstechnischen Eigenschaften werden die folgenden Druckfarbenrezepturen ausgewählt (Mengenangaben in Gew. -%) :

### Rezeptur 1:

| | | |
|---|---|---|
| Ebecryl^{®} 6054 | 4,2 Teile | aromat. Polyetheracrylat, UCB |
| Lauromer^{®} TPGDA | 45,3 Teile | Tripropylenglycoldiacrylat, BASF |
| Benzophenon | 5,0 Teile | Benzophenon, Merck |
| Ebecryl^{®} P115 | 5,0 Teile | aminfunktionelles Acrylat, UCB |
| | | |
| Additiv erfindungsgemäß | 0,5 Teile | |

### Rezeptur 2:

| | | |
|---|---|---|
| Laromer^{®} PO84 F | 94,5 Teile | Polyetheracrylat, BASF |
| Darocure^{®} 1173 | 3,0 Teile | Photoinitiator, Merck |
| Ebecryl^{®} P 115 | 2,0 Teile | aminfunktionelles Acrylat, UCB |
| | | |
| Additiv erfindungsgemäß | 0,5 Teile | |

Die Druckfarben werden auf übliche Weise gemäß den vorstehenden Rezepturen formuliert. Als letzter Rezepturbestandteil werden jeweils die Additive hinzugegeben, wobei die Einarbeitung mittels einer Perlmillscheibe eine Minute bei 2.500 U/min erfolgt.

Die Druckfarben werden 12 *µ*m naß auf coronavorbehandelter PVC-Folie aufgerakelt. Die Härtung erfolgt durch Einwirkung von ultraviolettem Licht (UVH) mit 120 W/cm mit Bahngeschwindigkeiten von 20 m/min. Dieser Vorgang wird jeweils einmal wiederholt.
Für die Ermittlung der Trennwerte wird ein 25 mm breites Klebeband der Firma Beiersdorf verwendet, welches mit Kautschukkleber beschichtet ist und im Handel unter der Bezeichnung Tesa^{®} 4154 erhältlich ist. Zur Messung der Abhäsivität wird 5 Minuten respektive 24 Stunden nach Härtung der Druckfarbe dieses Klebeband mit 70 g/cm² aufgewalzt. Nach dreistündiger Lagerung bei Raumtemperatur wird die Kraft gemessen, die benötigt wird, um das jeweilige Klebeband mit einer Geschwindigkeit von 12 mm/s unter einem Schälwinkel von 180 ° vom Untergrund abzuziehen. Diese Kraft wird als Trennwert/Release-Wert bezeichnet.

Kratzfestigkeit ist die Widerstandsfähigkeit einer Oberfläche gegenüber sichtbaren, linienförmigen Beschädigungen durch sich bewegende, die Oberfläche berührende, harte Körper. Zur Messung sogenannter Kratzwerte dient ein speziell umgebautes elektromotorisches Filmaufziehgerät. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der das Substrat (mit Druckfarbe beschichteter Film) befestigt wird, bewegt werden. Um die Kratzbeanspruchung zu simulieren, wird ein Klotz mit drei Spitzen auf den Druckfarbfilm gesetzt und mit 500 g beschwert. Die auf der Platte befindliche Prüffolie wird mit einer Geschwindigkeit von 12 mm/s unter dem Gewicht weggezogen. Die hierfür notwendige, vertikale Kraft wird gemessen und als Kratzwert bezeichnet. Die Ermittlung der Kratzwerte erfolgt jeweils 24 Stunden nach Aushärtung der Farben.

Ersetzt man den mit Spitzen versehenen Klotz durch einen Klotz mit flächiger Filzunterlage und verfährt man wie zuvor beschrieben, so misst man als Reibungskraft den sogenannten Gleitwert. Auch diese Prüfungen erfolgen jeweils 24 Stunden nach Aushärtung der Farben.

In den Tabellen 1 und 2 sind Durchschnittswerte von 5 Einzelmessungen wiedergegeben.

**Tabelle 1**

| (Rezeptur 1) : | | | | | |
|---|---|---|---|---|---|
| Verbindung | Konz. in Gew.-% | Gleitwert [cN] | Kratzwert [cN] | Trennwert n. 5 min. [cN] | Trennwert n. 24 h [cN] |
| Blind | - | 342 | 77 | 912 | 903 |
| 1 | 0,5 | 57 | 18 | 67 | 63 |
| 2 | 0,5 | 53 | 16 | 19 | 16 |
| 3 | 0,5 | 61 | 27 | 36 | 32 |
| 4 | 0,5 | 58 | 19 | 198 | 192 |
| 5 | 0,5 | 65 | 20 | 291 | 275 |
| 6 | 0,5 | 73 | 33 | 357 | 341 |
| 7 | 0,5 | 80 | 18 | 441 | 437 |
| 8 | 0,5 | 125 | 40 | 703 | 700 |
| 9 | 0,5 | 44 | 19 | 371 | 366 |
| 10 | 0,5 | 76 | 17 | 459 | 457 |
| 11 | 0,5 | 58 | 18 | 519 | 516 |
| 12 | 0,5 | 41 | 13 | 210 | 215 |
| 13 | 0,5 | 36 | 18 | 35 | 37 |
| 14 | 0,5 | 52 | 26 | 214 | 221 |
| 15 | 0,5 | 43 | 14 | 175 | 189 |
| 16 | 0,5 | 102 | 39 | 671 | 690 |
| 17 | 0,5 | 92 | 23 | 683 | 703 |
| 18 | 0,5 | 56 | 21 | 700 | 715 |
| 19 | 0,5 | 261 | 69 | 731 | 733 |
| 20 | 0,5 | 187 | 43 | 687 | 693 |
| 21 | 0,5 | 82 | 23 | 532 | 521 |
| 22 | 0,5 | 67 | 27 | 547 | 549 |
| 23 | 0,5 | 18 | 15 | 35 | 34 |

**Tabelle 2**

| (Rezeptur 2) : | | | | | |
|---|---|---|---|---|---|
| Verbindung | Konz. in Gew.-% | Gleitwert [cN] | Kratzwert [cN] | Trennwert n. 5 min [cN] | Trennwert n. 24 h [cN] |
| Blind | - | 312 | 121 | 836 | 814 |
| 1 | 0,5 | 67 | 20 | 41 | 38 |
| 2 | 0,5 | 59 | 13 | 15 | 13 |
| 3 | 0,5 | 71 | 17 | 25 | 23 |
| 4 | 0,5 | 68 | 26 | 330 | 328 |
| 5 | 0,5 | 82 | 27 | 273 | 272 |
| 6 | 0,5 | 83 | 39 | 309 | 299 |
| 7 | 0,5 | 86 | 36 | 427 | 396 |
| 8 | 0,5 | 129 | 51 | 613 | 592 |
| 9 | 0,5 | 59 | 28 | 473 | 458 |
| 10 | 0,5 | 78 | 16 | 592 | 572 |
| 11 | 0,5 | 65 | 20 | 650 | 645 |
| 12 | 0,5 | 48 | 22 | 241 | 238 |
| 13 | 0,5 | 42 | 18 | 59 | 48 |
| 14 | 0,5 | 53 | 29 | 241 | 263 |
| 15 | 0,5 | 46 | 22 | 200 | 209 |
| 16 | 0,5 | 125 | 42 | 674 | 698 |
| 17 | 0,5 | 107 | 31 | 701 | 705 |
| 18 | 0,5 | 63 | 27 | 704 | 721 |
| 19 | 0,5 | 263 | 102 | 770 | 773 |
| 20 | 0,5 | 195 | 96 | 732 | 740 |
| 21 | 0,5 | 86 | 22 | 613 | 621 |
| 22 | 0,5 | 69 | 26 | 672 | 677 |
| 23 | 0,5 | 20 | 16 | 37 | 33 |

Die Tabellen 1 und 2 zeigen, dass die erfindungsgemäßen Beispiele 1 bis 18 und 23 als Additive in beiden Lackrezepturen niedrigere Gleitwerte, Kratzwerte und Trennwerte als die Vergleichsprobe ohne Additiv (Blindwert) und den kommerziellen Verbindungen 19 und 20 aufweisen.

Bei den nichterfindungsgemäßen Verbindungen 21 und 22 wurden die Si-O-C-Verbindungen über die Umsetzung von Chlorsiloxanen mit primären Alkoholen erzeugt. Die erfindungsgemäßen Verbindungen 10 und 11 stellen strukturgleiche Systeme zu den Verbindungen 21 und 22 dar, die über eine dehydrogenative Kupplung erzeugt wurden.

Die Tabellen 1 und 2 zeigen, dass die erfindungsgemäßen Beispiele 10 bis 11 als Additive in beiden Lackrezepturen niedrigere Gleitwerte, Kratzwerte und Trennwerte als die Vergleichsprobe der nichterfindungsgemäßen Verbindungen 21 und 22 aufweisen.

Die höheren Werte der nichterfindungsgemäßen Verbindungen 21 und 22 gegenüber den erfindungsgemäßen Verbindungen 10 und 11 weisen auf Säurerückstände oder eine Salzfracht, die nicht vollständig aus dem Reaktionsgemisch entfernbar ist, hin. Weiterhin zeigen die nichterfindungsgemäßen Verbindungen 21 und 22 nach Lagerung eine gewisse Trübung und Amingeruch, die von Kunden unerwünscht ist.

## Patentansprüche

1. Verwendung von Organopolysiloxanyl(meth)acrylaten, die durch Umsetzung von SiH-Gruppen enthaltenden Polysiloxanen der allgemeinen durchschnittlichen Formel (II) 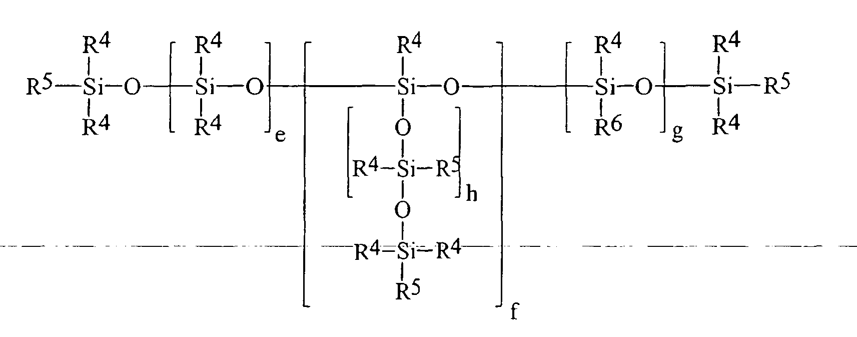 in denen
R⁴ gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen, vorzugsweise ein Alkylrest mit 1 bis 5 C-Atomen, insbesondere ein Methylrest ist
R⁵ H oder R⁴,
R⁶ H,
e 0 bis 1.000, vorzugsweise 5 bis 500, insbesondere 10 bis 300, insbesondere bevorzugt 10 bis 200,
f 0 bis 5, vorzugsweise < 2,
g 0 bis 200, vorzugsweise 0 bis 100, insbesondere 0 bis 80, insbesondere bevorzugt 0 bis 50,
h 0 bis 1.000, vorzugsweise 0 bis 500, insbesondere 0 bis 300, insbesondere < 100
sind, wobei mindestens ein Rest R⁵ oder R⁶ = H sein muss, mit einem Alkohol, der ausgewählt ist aus der Gruppe der einfach oder mehrfach (meth)acrylierten Monoalkohole oder Polyalkohole, oder aus einer Mischung derselbigen, oder aus Mischungen der einfach oder mehrfach (meth)acrylierten Mo-noalkohole oder Polyalkohole mit mindestens einem anderen Alkohol, ausgewählt aus der Gruppe der linearen oder verzweigten, gesättigten, ein- oder mehrfach ungesättigten, aromatischen, aliphatisch-aromatischen Mono- oder Polyalkohole, Polyethermonoalkohole, Polyetherpolyalkohole, Polyestermonoalkohole, Polyesterpolyalkohole, Aminoalkohole, insbesondere N-Alkyl-, Arylamino-EO-, -PO-Alkoholen, N-Alkyl- oder Arylaminoalkohole sowie deren Gemischen, wobei in einem oder mehreren Verfahrensschritten unter Einsatz eines lewissauren Katalysators oder eines Katalysators bestehend aus einer Carbonsäure und Salzen von Carbonsäuren die vorhandenen SiH-Gruppen des Polysiloxans teilweise oder vollständig durch Alkoholatreste der eingesetzten Alkohole ersetzt werden, in Mengen von 0,01 bis 10 Gew.-% als Additive in strahlenhärtenden Beschichtungen.

2. Verwendung von Organopolysiloxanyl(meth)acrylaten, gemäß Anspruch 1, **dadurch gekennzeichnet, dass** als Organopolysiloxanyl(meth)acrylate Verbindungen der allgemeinen durchschnittlichen Formel (I) verwendet werden, 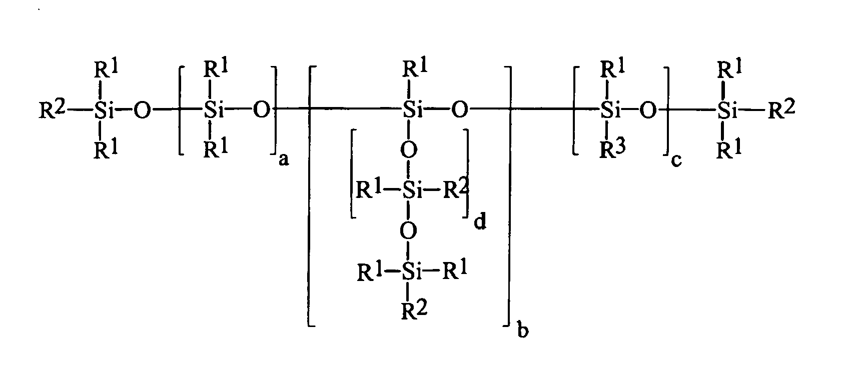 worin
R¹ gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
R² gleiche oder verschiedene Reste R¹ oder R³,
R³ gleiche oder verschiedene einfach oder mehrfach (meth)acrylierte Monoalkoxylate oder (meth)acrylierte Polyalkoxylate, oder eine Mischung derselbigen, oder eine Mischung der einfach oder mehrfach (meth)acrylierten Monoalkoxylate oder Polyalkoxylate mit mindestens einem beliebigen anderen Alkoxylat, ausgewählt aus der Gruppe basierend auf linearen oder verzweigten, gesättigten, ein- oder mehrfach ungesättigten, aromatischen, aliphatisch-aromatischen Mono oder Polyalkoholen, Polyethermonoalkoholen, Polyetherpolyalkoholen, Polyestermonoalkoholen, Polyesterpolyalkoholen, Aminoalkoholen, insbesondere N-Alkyl-, Arylamino-Ethylenoxyd-, -Propylenoxyd-Alkoholen, N-Alkyl- oder Arylaminoalkoxylate sowie deren Gemische, wobei das Verhältnis der einfach oder mehrfach (meth)acrylierten Monoalkoxylate oder Polyalkoxylate zu den beliebigen anderen Alkoxylaten so gewählt wird, dass mindestens ein einfach oder mehrfach (meth)acrylierter Monoalkoxylat- oder Polyalkoxylat-Rest in dem Organopolysiloxan enthalten ist,
a 0 bis 1.000, vorzugsweise 5 bis 500, insbesondere 10 bis 300,
b 0 bis 5, vorzugsweise < 2
c 1 bis 200, vorzugsweise 1 bis 100, insbesondere 1 bis 80,
d 0 bis 1.000, vorzugsweise 0 bis 500, insbesondere 0 bis 300, insbesondere bevorzugt 0 bis 100
sind, wobei mindestens einer der Reste R² oder R³ ein (meth)acrylierter Monoalkoxylat- oder Polyalkoxylat-Rest ist, in Mengen von 0,01 bis 10 Gew.-% als Additive in strahlenhärtenden Beschichtungen zur Verbesserung der Kratzfestigkeit und Gleitfähigkeit sowie des Release-Verhaltens.

3. Verwendung von Verbindungen gemäß Anspruch 2, **dadurch gekennzeichnet, dass** a 10 bis 200 ist.

4. Verwendung von Verbindungen gemäß einem der Ansprüche 2 bis 3, **dadurch gekennzeichnet, dass** b = 0 ist.

5. Verwendung von Verbindungen gemäß einem der Ansprüche 2 bis 4, **dadurch gekennzeichnet, dass** c = 1 bis 50 ist.

6. Verwendung von Verbindungen gemäß einem der Ansprüche 2 bis 5, **dadurch gekennzeichnet, dass** R¹ ein Alkylrest mit 1 bis 5 C-Atomen, vorzugsweise ein Methylrest ist.

7. Verwendung von Verbindungen gemäß einem der Ansprüche 2 bis 6, **dadurch gekennzeichnet, dass** R³ mindestens ein Rest ist ausgesucht aus der Gruppe 2-Hydroxyethylacrylsäureester, Hydroxypropylacrylsäureester, Hydroxybutylacrylsäureester und Pentaerithritolacrylsäureester.

8. Verwendung von Verbindungen gemäß einem der Ansprüche 2 bis 6, **dadurch gekennzeichnet, dass** R³ mindestens ein Rest ist ausgesucht aus der Gruppe monoacrylierten Polyether und monoacrylierten Di-oder Polycaprolactonen.

## Claims

1. Use of organopolysiloxanyl (meth)acrylates obtainable by reacting polysiloxanes containing SiH groups, of the general average formula (II) 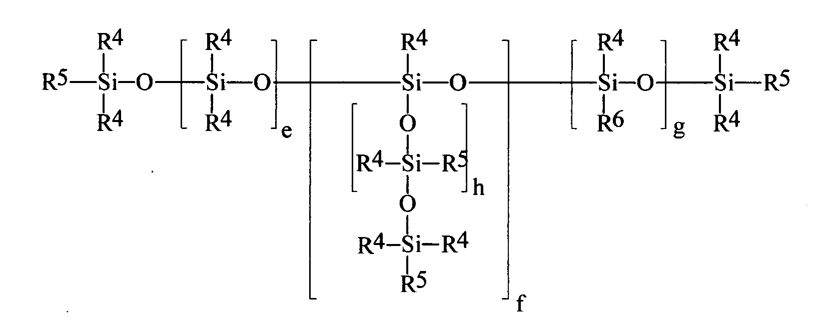 in which
R⁴ radicals are identical or different and selected from linear and branched, saturated, mono- and polyunsaturated alkyl, aryl, alkaryl and aralkyl radicals having 1 to 20 carbon atoms, preferably an alkyl radical having 1 to 5 carbon atoms, especially a methyl radical,
R⁵is H or R⁴,
R⁶is H,
e is 0 to 1000, preferably 5 to 500, in particular 10 to 300, with particular preference 10 to 200,
f is 0 to 5, preferably < 2,
g is 0 to 200, preferably 0 to 100, especially 0 to 80, with particular preference, 0 to 50,
h is 0 to 1000, preferably 0 to 500, especially 0 to 300, with particular preference < 100,
at least one radical R⁵ or R⁶ necessarily being H, with an alcohol selected from the group consisting of singly and multiply (meth)acrylated monoalcohols and polyalcohols, or of a mixture thereof, or of mixtures of singly or multiply (meth)acrylated monoalcohols or polyalcohols with at least one other alcohol selected from the group consisting of linear and branched, saturated, mono- and polyunsaturated, aromatic, aliphatic-aromatic monoalcohols and polyalcohols, polyether monoalcohols, polyether polyalcohols, polyester monoalcohols, polyester polyalcohols, amino alcohols, especially N-alkylamino- and arylamino-EO and -PO alcohols, N-alkylamino and arylamino alcohols, and also mixtures thereof, which comprises replacing some or all of the existing SiH groups of the polysiloxane in one or more process steps, using a Lewis-acidic catalyst or a catalyst composed of a carboxylic acid and salts of carboxylic acids, by alkoxide radicals of the alcohols employed, in amounts of 0.01% to 10% by weight, as additives in radiation-curing coatings.

2. Use of organopolysiloxanyl (meth)acrylates according to Claim 1, **characterized in that** the organopolysiloxanyl (meth)acrylates used are compounds of the general average formula (I) 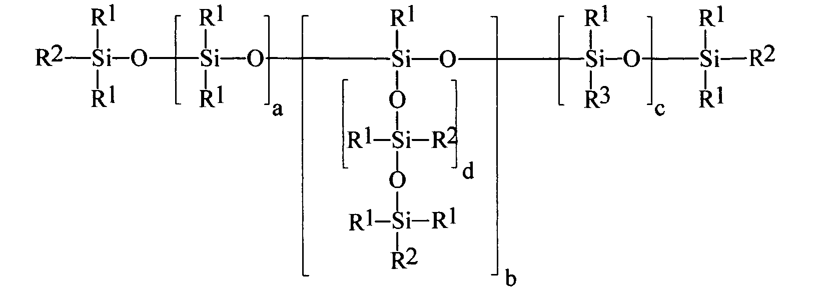 in which
R¹ radicals are identical or different and selected from linear and branched, saturated, mono- and polyunsaturated alkyl, aryl, alkaryl and aralkyl radicals having 1 to 20 carbon atoms,
R² radicals are identical or different radicals R¹ or R³,
R³ radicals are identical or different, singly or multiply (meth)acrylated monoalkoxylates or (meth)acrylated polyalkoxylates, or a mixture thereof, or a mixture of the singly or multiply (meth)acrylated monoalkoxylates or polyalkoxylates with at least one arbitrary other alkoxylate, selected from the group based on linear or branched, saturated, monounsaturated or polyunsaturated, aromatic, aliphatic-aromatic monoalcohols or polyalcohols, polyether monoalcohols, polyether polyalcohols, polyester monoalcohols, polyester polyalcohols, amino alcohols, especially N-alkylamino- and arylaminoethylene oxide- and -propylene oxide-alcohols, N-alkylamino or arylamino alkoxylates and also mixtures thereof, the ratio of the singly or multiply (meth)acrylated monoalkoxylates or polyalkoxylates to the arbitrary other alkoxylates being chosen such that at least one singly or multiply (meth)acrylated monoalkoxylate or polyalkoxylate radical is present in the organopolysiloxane,
a is 0 to 1000, preferably 5 to 500, especially 10 to 300,
b is 0 to 5, preferably < 2,
c is 1 to 200, preferably 1 to 100, especially 1 to 80,
d is 0 to 1000, preferably 0 to 500, especially 0 to 300, with particular preference 0 to 100,
at least one of the radicals R² or R³ being a (meth)acrylated monoalkoxylate or polyalkoxylate radical, in amounts of 0.01% to 10% by weight, as additives in radiation-curing coatings for improving the scratch resistance and gliding properties and also the release behavior.

3. Use of compounds according to Claim 2, **characterized in that** a is 10 to 200.

4. Use of compounds according to either of Claims 2 and 3, **characterized in that** b = 0.

5. Use of compounds according to any one of Claims 2 to 4, **characterized in that** c = 1 to 50.

6. Use of compounds according to any one of Claims 2 to 5, **characterized in that** R¹ is an alkyl radical having 1 to 5 carbon atoms, preferably a methyl radical.

7. Use of compounds according to any one of Claims 2 to 6, **characterized in that** R³ is at least one radical selected from the group consisting of 2-hydroxyethyl acrylate, hydroxypropyl acrylate, hydroxybutyl acrylate and pentaerythritol acrylate.

8. Use of compounds according to any one of Claims 2 to 6, **characterized in that** R³ is at least one radical selected from the group consisting of monoacrylated polyethers and monoacrylated di- and polycaprolactones.

## Revendications

1. Utilisation d'organopolysiloxanyl-(méth)acrylates, qui sont obtenus par transformation de polysiloxanes contenant des groupements SiH de formule générale moyenne (II) 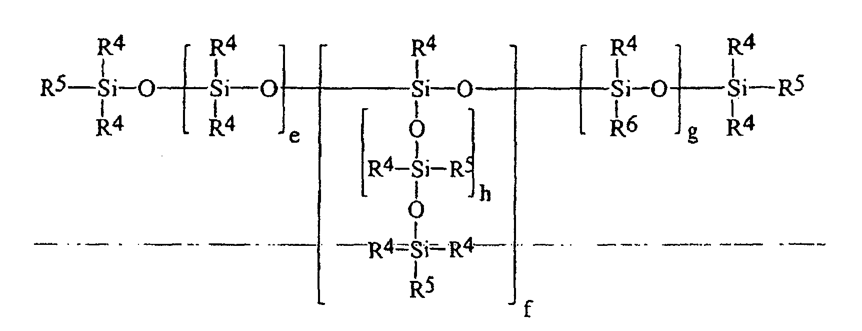 dans laquelle
R⁴ sont des radicaux identiques ou différents, choisis parmi les radicaux alkyle, aryle, alkaryle ou aralkyle linéaires ou ramifiés, saturés, monoinsaturés ou polyinsaturés comprenant 1 à 20 atomes de carbone, de préférence un radical alkyle comprenant 1 à 5 atomes de carbone, en particulier un radical méthyle
R⁵ représente H ou R⁴,
R⁶ représente H,
e vaut 0 à 1 000, de préférence 5 à 500, en particulier 10 à 300, de manière particulièrement préférée 10 à 200,
f vaut 0 à 5, de préférence < 2,
g vaut 0 à 200, de préférence 0 à 100, en particulier 0 à 80, de manière particulièrement préférée 0 à 50,
h vaut 0 à 1 000, de préférence 0 à 500, en particulier 0 à 300, de manière particulièrement préférée < 100,
au moins un radical R⁵ ou R⁶ devant représenter H, avec un alcool, choisi dans le groupe des monoalcools ou polyalcools mono(méth)acrylés ou poly(méth)acrylés, ou un mélange de ceux-ci ou parmi les mélanges des monoalcools ou polyalcools mono(méth)acrylés ou poly(méth)acrylés comprenant au moins un autre alcool, choisi dans le groupe des monoalcools ou polyalcools linéaires ou ramifiés, saturés, monoinsaturés ou polyinsaturés, aromatiques, aliphatiques-aromatiques, des polyéthermonoalcools, des polyétherpolyalcools, des polyestermonoalcools, des polyesterpolyalcools, des aminoalcools, en particulier les N-alkylamino-OE-alcools, les N-alkylamino-OP-alcools, les arylamino-OE-alcools, les arylamino-OP-alcools, les N-alkylaminoalcools ou les arylaminoalcools ainsi que leurs mélanges, où, dans une ou plusieurs étapes de procédé, en utilisant un catalyseur acide de Lewis ou un catalyseur constitué par un acide carboxylique et les sels d'acides carboxyliques, les groupements SiH présents du polysiloxane sont remplacés partiellement ou complètement par des radicaux alcoolate des alcools utilisés, en des quantités de 0,01 à 10% en poids comme additifs dans des revêtements durcissant sous l'effet d'un rayonnement.

2. Utilisation d'organopolysiloxanyl-(méth)acrylates selon la revendication 1, **caractérisée en ce qu'**on utilise comme organopolysiloxanyl-(méth)acrylates des composés de formule générale moyenne (I), 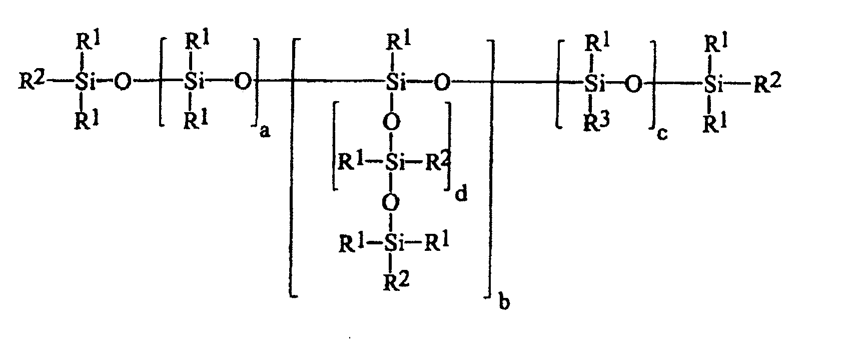 où
R¹ sont des radicaux identiques ou différents, choisis parmi les radicaux alkyle, aryle, alkaryle ou aralkyle linéaires ou ramifiés, saturés, monoinsaturés ou polyinsaturés comprenant 1 à 20 atomes de carbone
R² sont des radicaux R¹ ou R³ identiques ou différents,
R³ sont des monoalcoxylates ou des polyalcoxylates identiques ou différents mono(méth)acrylés ou poly(méth)acrylés ou un mélange de ceux-ci ou un mélange des monoalcoxylates ou des polyalcoxylates mono(méth)acrylés ou poly(méth)acrylés avec au moins un autre alcoxylate quelconque, choisi dans le groupe formé par les monoalcools ou polyalcools linéaires ou ramifiés, saturés, monoinsaturés ou polyinsaturés, aromatiques, aliphatiques-aromatiques, les polyéthermonoalcools, les polyétherpolyalcools, les polyestermonoalcools, les polyesterpolyalcools, les aminoalcools, en particulier les N-alkyl-oxyde d'éthylène-alcools, les N-alkyl-oxyde de propylène-alcools, les arylamino-oxyde d'éthylène-alcools, les aryl-oxyde de propylène-alcools, les N-alkylaminoalcoxylates ou arylaminoalcoxylates ainsi que leurs mélanges, le rapport des monoalcoxylates ou polyalcoxylates mono (méth) acrylés ou poly(méth)acrylés aux autres alcoxylates quelconques étant choisi de telle manière qu'au moins un radical monoalcoxylate ou polyalcoxylate mono(méth)acrylé ou poly(méth)acrylé soit contenu dans l'organopolysiloxane,
a vaut 0 à 1 000, de préférence 5 à 500, en particulier 10 à 300,
b vaut 0 à 5, de préférence < 2,
c vaut 1 à 200, de préférence 1 à 100, en particulier 1 à 80,
d vaut 0 à 1 000, de préférence 0 à 500, en particulier 0 à 300, de manière particulièrement préférée 0 à 100,
au moins un des radicaux R² ou R³ représentant un radical monoalcoxylate ou polyalcoxylate (méth)acrylé, en des quantités de 0,01 à 10% en poids comme additifs dans des revêtements durcissant sous l'effet d'un rayonnement en vue d'améliorer la résistance aux griffes et l'aptitude au glissement ainsi que le comportement antiadhésif.

3. Utilisation de composés selon la revendication 2, **caractérisée en ce que** a vaut 10 à 200.

4. Utilisation de composés selon l'une quelconque des revendications 2 et 3, **caractérisée en ce que** b = 0.

5. Utilisation de composés selon l'une quelconque des revendications 2 à 4, **caractérisée en ce que** c = 1 à 50.

6. Utilisation de composés selon l'une quelconque des revendications 2 à 5, **caractérisée en ce que** R¹ représente un radical alkyle comprenant 1 à 5 atomes de carbone, de préférence un radical méthyle.

7. Utilisation de composés selon l'une quelconque des revendications 2 à 6, **caractérisée en ce que** R³ représente, au moins un radical choisi dans le groupe des esters de l'acide 2-hydroxyéthylacrylique, des esters de l'acide hydroxypropylacrylique, des esters de l'acide hydroxybutylacrylique et des esters de l'acide pentaérythritolacrylique.

8. Utilisation de composés selon l'une quelconque des revendications 2 à 6, **caractérisée en ce que** R³ représente au moins un radical choisi dans le groupe des polyéthers monoacrylés et des dicaprolactones ou des polycaprolactones monoacrylées.
